# EUROPEAN PATENT APPLICATION

(11) **EP 4 524 744 A1**
(43) Date of publication of application: **19.03.2025**
(21) Application number: 23856428.0
(22) Date of filing: 02.08.2023
(51) Int. Cl.: G06F 9/54

(54) **DATA ACCESS METHOD AND ELECTRONIC DEVICE**

(30) Priority: 23.08.2022 CN 202211014839
(71) Applicant: Huawei Technologies Co., Ltd., Shenzhen, Guangdong 518129 (CN)
(72) Inventor: GONG, Ashi, Shenzhen, Guangdong 518129 (CN); XU, Daqing, Shenzhen, Guangdong 518129 (CN); SUN, Bingxin, Shenzhen, Guangdong 518129 (CN)
(74) Representative: Goddar, Heinz J.
(86) International application number: PCT/CN2023/110783
(87) International publication number: WO 2024/041338

(57) **Abstract**

A data access method and an electronic device are provided, and relate to the field of terminal technologies. The method is applied to the electronic device, the electronic device includes a first application, a second application, and a first system service, and the first system service has permission to reside in the electronic device and permission to access the second application. The method includes: The first application sends a first message to the first system service based on identity information of the first system service, where the first message is used to request to perform a first access operation on first target data of the second application; the first system service performs the first access operation on the first target data of the second application in response to the first message; and the first system service returns a first access result to the first application, where the first access result indicates a result obtained by performing the first access operation on the first target data of the second application.

## Description

This application claims priority to Chinese Patent Application No. 202211014839.1, filed with the China National Intellectual Property Administration on August 23, 2022 and entitled "DATA ACCESS METHOD AND ELECTRONIC DEVICE", which is incorporated herein by reference in its entirety.

### TECHNICAL FIELD

This application relates to the field of terminal technologies, and in particular, to a data access method and an electronic device.

### BACKGROUND

Currently, various electronic devices such as a mobile phone, a tablet computer, and a smartwatch have become increasingly popular. The electronic device may include a plurality of applications. For any application, the application may need to access data of another application.

In the conventional technology, when a first application needs to access data of a second application, the first application first starts the second application, and then accesses the data of the second application through the second application. As a result, the second application may be frequently started, causing various problems such as high power consumption.

### SUMMARY

In view of this, this application provides a data access method and an electronic device, so that data of a data source application can be accessed when frequent startup of the data source application is reduced or avoided. This reduces problems such as high power consumption, and improves performance of the electronic device.

To achieve the foregoing objective, according to a first aspect, an embodiment of this application provides a data access method, applied to an electronic device, where the electronic device includes a first application, a second application, and a first system service, and the first system service has permission to reside in the electronic device and permission to access the second application. The method includes:

The first application sends a first message to the first system service based on identity information of the first system service, where the first message is used to request to perform a first access operation on first target data of the second application;
the first system service performs the first access operation on the first target data of the second application in response to the first message; and
the first system service returns a first access result to the first application, where the first access result indicates a result obtained by performing the first access operation on the first target data of the second application.

In this embodiment of this application, because the first system service has permission to directly access a data producer and the permission to reside in the electronic device, when the first system service does not need to be additionally enabled again, and the second application does not need to be started, the first application may send the first message to the first system service based on the identity information of the first system service; the first system service may perform the first access operation on the first target data of the second application based on the first message in response to the first message; and the first system service may further return the first access result to the first application. This reduces power consumption of the electronic device and improves performance of the electronic device.

In some implementations, after performing a result of the first access operation on the first target data of the second application, the first system service may actively return the first access result to the first application. In some other implementations, after performing a result of the first access operation on the first target data of the second application, the first system service may not actively return the first access result to the first application, but when the first application queries the first access result from the first system service, the first system service returns the first access result to the first application.

In some implementations, the first system service may be a proxy service. In some implementations, the identity information of the first system service may include at least one of a process identifier, a service identifier, and a communication address that correspond to the first system service.

In some implementations, the first access operation may include a type of operation, for example, a data addition operation, a data deletion operation, a data modification operation, or a data query operation.

In some implementations, the first message may include feature information of the first target data and an operation type identifier. The first target data may be to-be-accessed data. The feature information of the first target data may indicate a feature of the first target data, and the operation type identifier may indicate that a type of the first access operation is specifically a data addition operation, a data deletion operation, a data modification operation, or a data query operation. In some implementations, the feature information of the first target data may indicate at least one of a type, a name, an ID, and the like of the first target data. In some implementations, the feature information of the first target data may include a uniform resource identifier (uniform resource identifier, URI) of the first target data.

In some implementations, the electronic device further includes a second system service, the second system service is used to manage a plurality of system services in the electronic device, the plurality of system services include the first system service, and before the first application sends the first message to the first system service based on the identity information of the first system service, the method further includes:

The first application obtains the identity information of the first system service from the second system service.

The first application may query the identity information of the first system service through the second system service. This improves reliability of communication between the first application and the first system service, and further ensures reliability of data access.

In some implementations, the second system service may be a system service management service.

In some implementations, that the first application sends a first message to the first system service based on identity information of the first system service includes:

When the second application is not started currently, the first application sends the first message to the first system service based on the identity information of the first system service; or
when the first target data is persistent data, the first application sends the first message to the first system service based on the identity information of the first system service; or
when the second application is a system application, the first application sends the first message to the first system service based on the identity information of the first system service.

In some implementations, when the second application is not started currently, the first target data is the persistent data, and the second application is the system application, the first application sends the first message to the first system service based on the identity information of the first system service.

It should be noted that, during actual application, the first application may determine, based on a preset access mode selection strategy, whether to use a silent access mode. If the first application may determine, based on the preset access mode selection strategy, to use the silent access mode, the first application sends the first message to the first system service based on the identity information of the first system service. This further improves reliability of determining an access mode. In some implementations, the access mode selection strategy includes: determining to use the silent access mode or a non-silent access mode based on at least one of a type of the second application, a security coefficient corresponding to the second application, a security coefficient corresponding to the first target data, a type of the first target data, a running status of the second application, a data access occasion, power consumption of the electronic device, a data amount of the first target data, access duration, a device resource status, a running status of the electronic device, and the like. This further improves accuracy of selecting a data access mode.

In some implementations, the first application further sends a silence identifier to the first system service, where the silence identifier is used to indicate to access the first target data of the second application through the first system service; and
that the first system service performs the first access operation on the first target data of the second application in response to the first message includes:
When the first system service receives the first message and the silence identifier, the first system service performs the first access operation on the first target data of the second application in response to the first message.

The silence identifier can help the first system service quickly and accurately determine that a current access mode is the silent access mode, so that the first system service can quickly respond to the first message, to improve access reliability and efficiency.

In some implementations, the silence identifier may be carried in the first message.

In some implementations, the electronic device further includes a third system service, the third system service manages at least one application in the electronic device, and the at least one application includes the second application. The method further includes:
The first application obtains identity information of the second application from the third system service;
the first application sends the first message and a non-silence identifier to the second application based on the identity information of the second application, where the non-silence identifier is used to indicate to access the first target data of the second application through the second application; and
when the second application receives the first message and the non-silence identifier, the second application performs the first access operation on the first target data of the second application in response to the first message.

Compatibility of the silent access mode and the non-silent access mode may be implemented by using the non-silent identifier and the silence identifier. This further improves reliability of cross-application access.

In some implementations, the third system service may include an activity manager.

In some implementations, the non-silence identifier may be carried in the first message.

In some implementations, the second application may return the first access result to the first application.

In some implementations, after the first application sends the first message to the first system service based on the identity information of the first system service, the method further includes:

The first application obtains the identity information of the second application from the third system service in response to a first event, where the first event is used to trigger the first application to switch from the silent access mode to the non-silent access mode;
the first application sends a second message and the non-silence identifier to the second application based on the identity information of the second application, where the second message is used to request to perform a second access operation on second target data of the second application; and
when the second application receives the second message and the non-silence identifier, the second application performs the second access operation on the second target data of the second application in response to the second message.

It should be noted that the first application may detect the first event, or another application or system service in the electronic device may detect the first event. A manner of detecting the first event is not limited in this embodiment of this application.

In some implementations, the second application may return a second access result to the first application, and the second access result may indicate a result obtained by performing the second access operation on the second target data of the second application.

In some implementations, after the first application sends the first message and the non-silence identifier to the second application based on the identity information of the second application, the method further includes:

The first application sends a third message to the first system service based on the identity information of the first system service in response to a second event, where the second event is used to trigger the first application to switch from the non-silent access mode to the silent access mode, and the third message is used to request to perform a third access operation on third target data of the second application; and
the first system service performs the third access operation on the third target data of the second application in response to the third message.

It should be noted that the first application may detect the second event, or another application or system service in the electronic device may detect the second event. A manner of detecting the second event is not limited in this embodiment of this application.

In some implementations, the first system service may return a third access result to the first application, and the third access result may indicate a result obtained by performing the third access operation on the third target data of the second application.

The first application may first select, based on the preset access mode selection strategy, the silent access mode to access the data of the second application or the non-silent access mode to access the data of the second application. In addition, after starting to perform access in the mode determined based on the access mode selection strategy, the first application may further switch between the silent access mode and the non-silent access mode based on the first event and the second event. In this way, reliability of cross-application access can be further improved, and an access mode at any moment can match requirements of the electronic device at the moment in various aspects such as power consumption. This improves performance of the electronic device.

In some implementations, the second event may be different from the first event, and the first event and the second event cannot occur simultaneously. In some implementations, the second event and the first event may be mutually opposite events.

In some implementations, the first system service is further used to provide a data storage service for the second application, the first system service includes a data directory corresponding to the second application, and that the first system service performs the first access operation on the first target data of the second application in response to the first message includes:

The first system service determines a storage location of the first target data based on the data directory; and
the first system service performs the first access operation on the first target data at the storage location.

In some implementations, the first system service may be a subservice in the distributed data management service described above. Certainly, during actual application, the first system service may alternatively be another system service associated with the distributed data management service.

In some implementations, the first system service may determine the storage location of the first target data from the data directory based on the feature information of the first target data.

In some implementations, the electronic device further includes a fourth system service, the fourth system service is used to provide a data storage service for the second application, the fourth system service includes a data directory corresponding to the second application, and that the first system service performs the first access operation on the first target data of the second application in response to the first message includes:

The first system service obtains the data directory from the fourth system service;
the first system service determines a storage location of the first target data based on the data directory; and
the first system service performs the first access operation on the first target data at the storage location.

In some implementations, the fourth system service may be the distributed data management service described above, and the distributed data management service and the proxy service may be two independent system services.

In some implementations, the first application includes a software development kit (software development kit, SDK) of the second application; and that the first application sends a first message to the first system service based on identity information of the first system service includes:

The first application sends the first message to the first system service based on the identity information of the first system service by using the SDK of the second application; and
that the first system service returns a first access result to the first application includes:
The first system service returns the first access result to the SDK of the second application.

The first application may implement cross-application access to the data of the second application by using the SDK of the second application, and the second application may determine a specific process of accessing the data of the second application. This reduces or avoids a specific process in which the first application senses access to the data of the second application, so that access security can be further improved.

In some implementations, before the first system service performs the first access operation on the first target data of the second application in response to the first message, the method further includes:
The first system service determines that the first application has the permission to connect to the second application.

Connection authentication is performed on the second application, so that it can be ensured that the first application has the permission to connect to the second application. This improves access security.

In some implementations, before the first system service performs the first access operation on the first target data of the second application in response to the first message, the method further includes:
The first system service determines that the first application has the permission to access the second application.

Access authentication is performed on the second application, so that it can be ensured that the first application has the permission to access the second application. This improves access security.

In some implementations, the first access operation is a data addition operation, a data deletion operation, or a data modification operation, and that the first system service determines that the first application has the permission to access the second application includes:
The first system service determines that the first application has permission to write data to the second application.

In some implementations, the first access operation is a data query operation, and that the first system service determines that the first application has the permission to access the second application includes:
The first system service determines that the first application has permission to read data from the second application.

In some implementations, before the first system service accesses the data of the second application in response to the first message, the method further includes:
The first system service determines that the first application has permission to connect to the first system service.

Connection authentication is performed on the second application, so that it can be ensured that the first application has the permission to connect to the first system service. This improves access security.

In some implementations, before the first system service accesses the data of the second application in response to the first message, the method further includes:
The first system service determines that the first application has permission to access the first system service.

Access authentication is performed on the second application, so that it can be ensured that the first application has the permission to access the first system service. This improves access security.

According to a second aspect, an embodiment of this application provides a data access method, applied to a first system service in an electronic device, where the electronic device further includes a first application and a second application, and the first system service has permission to reside in the electronic device and permission to access the second application. The method includes:
receiving a first message from the first application, where the first message is used to request to perform a first access operation on first target data of the second application;
performing the first access operation on the first target data of the second application in response to the first message; and
returning a first access result to the first application, where the first access result indicates a result obtained by performing the first access operation on the first target data of the second application.

In this embodiment of this application, because the first system service has permission to directly access a data producer and the permission to reside in the electronic device, when the first system service does not need to be additionally enabled again, and the second application does not need to be started, the first system service may obtain the first message sent by the first application, and perform the first access operation on the first target data of the second application based on the first message in response to the first message; and the first system service may further return the first access result to the first application. This reduces power consumption of the electronic device and improves performance of the electronic device.

In some implementations, the performing the first access operation on the first target data of the second application in response to the first message includes:
when receiving the first message and a silence identifier, performing the first access operation on the first target data of the second application in response to the first message, where the silence identifier is used to indicate to access the first target data of the second application through the first system service.

In some implementations, the first application includes an SDK of the second application, and that the first system service receives the first message from the first application includes:
receiving the first message sent by the SDK of the second application; and
the returning a first access result to the first application includes:
   returning the first access result to the SDK of the second application.

In some implementations, the first system service is further used to provide a data storage service for the second application, the first system service includes a data directory corresponding to the second application, and the performing the first access operation on the first target data of the second application in response to the first message includes:
determining a storage location of the first target data based on the data directory; and
performing the first access operation on the first target data at the storage location.

In some implementations, the electronic device further includes a fourth system service, the fourth system service is used to provide a data storage service for the second application, the fourth system service includes a data directory corresponding to the second application, and the accessing the first target data of the second application in response to the first message includes:
obtaining the data directory from the fourth system service;
determining a storage location of the first target data based on the data directory; and
performing the first access operation on the first target data at the storage location.

In some implementations, before the performing the first access operation on the first target data of the second application in response to the first message, the method further includes:
determining that the first application has permission to connect to the second application.

In some implementations, before the first system service performs the first access operation on the first target data of the second application in response to the first message, the method further includes:
determining that the first application has the permission to access the second application.

In some implementations, the first access operation is a data addition operation, a data deletion operation, or a data modification operation, and that the first system service determines that the first application has the permission to access the second application includes:
The first system service determines that the first application has permission to write data to the second application.

In some implementations, the first access operation is a data query operation, and that the first system service determines that the first application has the permission to access the second application includes:
The first system service determines that the first application has permission to read data from the second application.

In some implementations, before the first system service accesses the data of the second application in response to the first message, the method further includes:
The first system service determines that the first application has permission to connect to the first system service.

In some implementations, before the first system service accesses the data of the second application in response to the first message, the method further includes:
The first system service determines that the first application has permission to access the first system service.

According to a third aspect, an embodiment of this application provides a data access apparatus. The apparatus has a function of implementing behavior of the electronic device according to the foregoing aspects and the possible implementations of the foregoing aspects. The function may be implemented by hardware, or may be implemented by executing corresponding software by hardware. The hardware or the software includes one or more modules or units corresponding to the foregoing function, for example, a transceiver module or unit, a processing module or unit, and an obtaining module or unit.

According to a fourth aspect, an embodiment of this application provides an electronic device, including a memory and a processor. The memory is configured to store a computer program, and the processor is configured to perform the method according to any one of the implementations in the first aspect or the method according to any one of the implementations in the second aspect when invoking the computer program.

According to a fifth aspect, an embodiment of this application provides a chip system. The chip system includes a processor. The processor is coupled to a memory, and the processor executes a computer program stored in the memory, to implement the method according to any one of the implementations in the first aspect or the method according to any one of the implementations in the second aspect.

The chip system may be a single chip or a chip module including a plurality of chips.

According to a sixth aspect, an embodiment of this application provides a computer-readable storage medium. The computer-readable storage medium stores a computer program, and when the computer program is executed by a processor, the method according to any one of the implementations in the first aspect or the method according to any one of the implementations in the second aspect is implemented.

According to a seventh aspect, an embodiment of this application provides a computer program product. When the computer program product runs on an electronic device, the electronic device is enabled to perform the method according to any one of the implementations in the first aspect or the method according to any one of the implementations in the second aspect.

It may be understood that, for beneficial effects of the third aspect to the seventh aspect, refer to related descriptions in the first aspect or the second aspect. Details are not described herein again.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3 is a diagram of a data sharing scenario according to an embodiment of this application;
FIG. 4 is a block diagram of a structure of a data sharing system according to an embodiment of this application;
FIG. 5 is a schematic flowchart of a data access method according to an embodiment of this application;
FIG. 6 is a schematic flowchart of a silent access method according to an embodiment of this application;
FIG. 7 is a diagram of a structure of a URI according to an embodiment of this application;
FIG. 8 is a schematic flowchart of another silent access method according to an embodiment of this application;
FIG. 9A and FIG. 9B are a schematic flowchart of another silent access method according to an embodiment of this application;
FIG. 10A and FIG. 10B are a schematic flowchart of another silent access method according to an embodiment of this application;
FIG. 11 is a schematic flowchart of a non-silent access method according to an embodiment of this application;
FIG. 12A and FIG. 12B are a schematic flowchart of another non-silent access method according to an embodiment of this application;
FIG. 13A and FIG. 13B are a schematic flowchart of another non-silent access method according to an embodiment of this application;
FIG. 14 is a schematic flowchart of another data access method according to an embodiment of this application;
FIG. 15 is a schematic flowchart of another data access method according to an embodiment of this application;
FIG. 16 is a schematic flowchart of another data access method according to an embodiment of this application;
FIG. 17 is a schematic flowchart of another data access method according to an embodiment of this application;
FIG. 18 is a schematic flowchart of another data access method according to an embodiment of this application; and
FIG. 19 is a schematic flowchart of another data access method according to an embodiment of this application.

### DESCRIPTION OF EMBODIMENTS

A data access method provided in embodiments of this application may be applied to an electronic device like a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

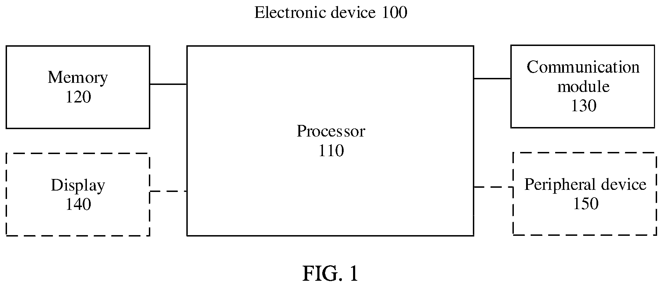

FIG. 1 is a diagram of a structure of an example electronic device 100 according to an embodiment of this application. The electronic device 100 may include a processor 110, a memory 120, a communication module 130, and the like.

The processor 110 may include one or more processing units, and the memory 120 is configured to store program code and data. In this embodiment of this application, the processor 110 may execute computer-executable instructions stored in the memory 120, to control and manage an action of the electronic device 100.

The communication module 130 may be configured to implement communication between internal modules of the electronic device 100, or communication between the electronic device 100 and another external electronic device, or the like. For example, if the electronic device 100 communicates with another electronic device in a wired connection manner, the communication module 130 may include an interface, for example, a USB interface. The USB interface may be an interface that conforms to a USB standard specification, and may be specifically a mini USB interface, a micro USB interface, a USB Type-C interface, or the like. The USB interface may be configured to connect to a charger to charge the electronic device 100, or may be configured to perform data transmission between the electronic device 100 and a peripheral device, or may be configured to connect to a headset to play an audio by using the headset. The interface may be further configured to connect to another electronic device, for example, an AR device.

Alternatively, the communication module 130 may include an audio component, a radio frequency circuit, a Bluetooth chip, a wireless fidelity (wireless fidelity, Wi-Fi) chip, a near-field communication (near-field communication, NFC) module, and the like, and may implement interaction between the electronic device 100 and the another electronic device in a plurality of different manners.

Optionally, the electronic device 100 may further include a display 140, and the display 140 may display an image, a video, or the like in a human-computer interaction interface.

Optionally, the electronic device 100 may further include a peripheral device 150, for example, a mouse, a keyboard, a speaker, or a microphone.

It should be understood that, in addition to various components or modules shown in FIG. 1, the structure of the electronic device 100 is not specifically limited in embodiments of this application. In some other embodiments of this application, the electronic device 100 may further include more or fewer components than those shown in the figure, or a combination of some components, or splits from some components, or an arrangement of different components. The components shown in the figure may be implemented by hardware, software, or a combination of software and hardware.

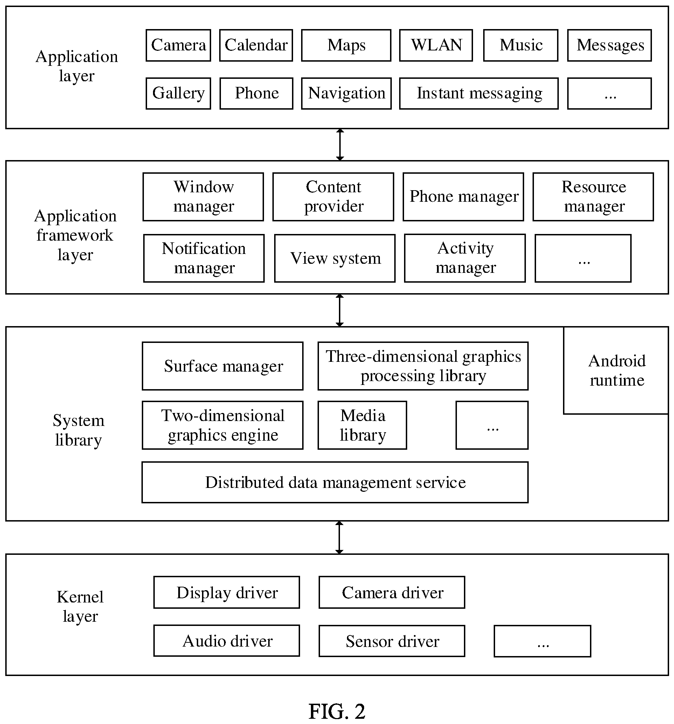

A software system of the electronic device 100 may use a layered architecture, an event-driven architecture, a microkernel architecture, a micro service architecture, or a cloud architecture. In this embodiment of this application, an Android system of the layered architecture is used as an example to describe a software structure of the electronic device 100. FIG. 2 is a block diagram of the software structure of the electronic device 100 in this embodiment of this application.

In the layered architecture, software is divided into several layers, and each layer has a clear role and task. The layers communicate with each other through a software interface. In some implementations, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Phone, Maps, Navigation, WLAN, instant messaging, Music, Videos, and Messages. The application may also be briefly referred to as an application. Each application included in the application package may be a system application, or may be a third-party application. The third-party application may be an application from another party other than a user and an operating system, for example, an instant messaging application downloaded and installed by the user from an instant messaging website.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a view for displaying a text and a view for displaying an image.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification message may automatically disappear after a short pause without a user interaction. For example, the notification manager is configured to notify download completion, give a message notification, and the like. The notification manager may alternatively be a notification that appears in a top status bar of the system in a form of a graph or a scroll bar text, for example, a notification of an application that runs on a background, or may be a notification that appears on a screen in a form of a dialog window. For example, text information is displayed in the status bar, an announcement is given, the electronic device vibrates, or the indicator light blinks.

In some implementations, the application framework layer may further include an activity manager, and the activity manager is configured to start, switch, and schedule an application and a component of the application. In some implementations, the activity manager may verify the application or component before the application or component is started, to ensure security of the started application or component.

The Android runtime includes a core library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL). The system library may further include a system service (system service) like a distributed data management service module. The system service may have permission to reside in the electronic device, and the system service may run provided that the electronic device is powered on and runs.

The surface manager is configured to: manage a display subsystem, and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The distributed data management service module may isolate data of different applications to ensure that the data of the different applications cannot access each other. An application may create a database by invoking a distributed data service interface, where the database may include data in the database. The distributed data management service module may also provide a database distribution capability between different devices for an application. Between trusted devices, the distributed data management service module may support data synchronization of the application, and provide consistent data access experience on a plurality of devices.

In some implementations, the system library may further include a system service management service (samgr). The system service management service may implement system service startup, registration, query, intra-process communication, cross-process communication, and the like.

The kernel layer is a layer between hardware and software. The kernel layer includes at least a display driver, a camera driver, an audio driver, and a sensor driver.

To facilitate understanding of the technical solutions in embodiments of this application, the following first describes an application scenario of embodiments of this application.

The electronic device may include a plurality of applications. The electronic device may allocate corresponding storage space to each application, and the storage space may be used to store data of the application corresponding to the storage space. To ensure data security, data of different applications is isolated from each other by using a sandbox or in another manner, so that data of an application cannot be directly accessed by another application. The access herein includes operations such as adding, deleting, modifying, and querying data. To provide richer experience for a user, data may need to be shared between different applications. For example, a Contacts application in the electronic device stores at least one contact, and an instant messaging application may access the contact in the Contacts application, to recommend, to the user based on the obtained contact, a friend that also uses the instant messaging application. For another example, a Settings application stores setting data corresponding to the electronic device, and a beautification application like a home screen wallpaper may access the setting data, to provide a more beautiful and comfortable home screen for the user based on the setting data. For another example, a Calendar application stores calendar data set by the user, and a Smart assistant application may access the calendar data, to intelligently recommend services such as a travel plan and navigation to the user based on the Calendar application.

In some implementations, an application that accesses data may be referred to as a data consumer or a data visitor; and an application in which the accessed data is located or an application that provides data may be referred to as a data provider, a data producer, or a data source application.

In some implementations, the data consumer may start the data producer, and access data of the application data producer through the data producer. This access mode in which the data of the data producer can be accessed only when the data producer is started may also be referred to as non-silent access.

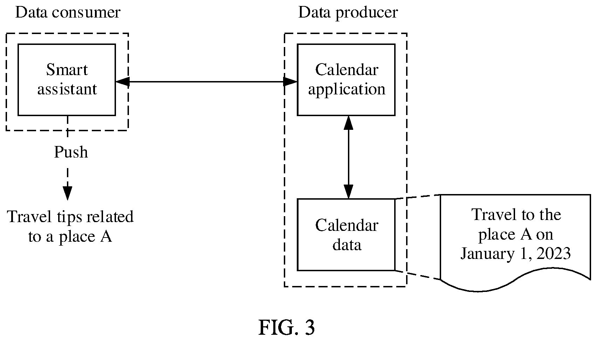

For example, as shown in FIG. 3, when Smart assistant that is used as the data consumer needs to access the calendar data of the Calendar application that is used as the data producer, Smart assistant needs to first start the Calendar application, so that the Calendar application is in a running state. After the Calendar application is started and runs, the Calendar application may respond to an access request of Smart assistant, process the calendar data based on the access request, and return a processing result to Smart assistant. If the calendar data obtained by Smart assistant is "Travel to the place A on January 1, 2023", Smart assistant may push, to the user based on the calendar data, travel tips related to the place A.

However, the data source application needs to be started each time data is accessed in the non-silent access mode. Frequent startup of the data source application causes high power consumption of the electronic device and other problems. Especially when a plurality of applications in the electronic device are frequently started, these problems affect performance of the electronic device.

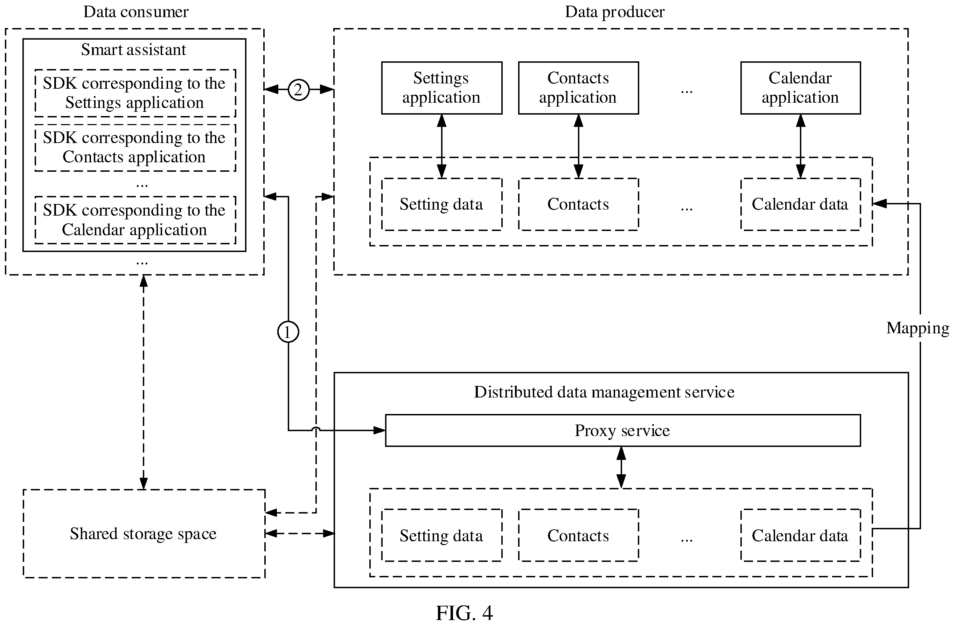

To at least partially resolve the foregoing technical problems, embodiments of this application provide a data sharing system. As shown in FIG. 4, the system includes a data consumer, a data producer, and a proxy service.

The data consumer may be an application at the application layer in FIG. 2. The data consumer may include a system application and/or a third-party application. The data consumer may access data of the data consumer across applications. In some implementations, to ensure security of cross-application access, the data consumer may include an SDK of the data producer, and the data consumer may access the data of the data producer cross the applications by using the SDK corresponding to the data producer. In some implementations, the data consumer may include a plurality of SDKs, and each SDK may correspond to one data producer. In some implementations, different data consumers may include an SDK corresponding to a same data producer, so that the different data consumers may access data of the same data producer.

For example, the data consumer in FIG. 4 includes Smart assistant, including an SDK corresponding to a Settings application, an SDK corresponding to a Contacts application, an SDK corresponding to a Calendar application, and the like. In this case, Smart assistant may access setting data of the Settings application by using the SDK corresponding to the Settings application; Smart assistant may access a contact in the Contacts application by using the SDK corresponding to the Contacts application; and Smart assistant may access calendar data of the Calendar application by using the SDK corresponding to the Calendar application.

The data producer may be an application at the application layer in FIG. 2. The data producer may include a system application and/or a third-party application. Data of the data producer may be accessed by the data consumer in a cross-application access mode.

For example, the data producer in FIG. 4 includes the Settings application, the Contacts application, the Calendar application, and the like. The Settings application, the Contacts application, and the Calendar application are system applications. In this case, any data consumer like Smart assistant may access data such as the setting data of the Settings application, the contact in the Contacts application, and the calendar data of the Calendar application.

The proxy service may have high system permission to provide a unified proxy for the data producer. In some implementations, the proxy service has permission to directly access the data producer, that is, the proxy service may access the data of the data producer in a same manner in which the data producer accesses the data of the data producer, so that the data of the data producer can be accessed without requiring startup of the data producer. In some implementations, the proxy service may have permission to reside in an electronic device, so that the proxy service does not need to be frequently enabled or disabled. This can reduce power consumption of the electronic device.

In some implementations, the proxy service may be implemented as a system service, so that the proxy service may have the permission to reside in the electronic device and the permission to directly access the data producer. The proxy service may be registered as the system service in the system service management service, and a function of the system service is registered. In this way, the system service management service may start and manage the system service, namely, the proxy service, and the function of the system service.

In some implementations, the proxy service is deployed in the distributed data management service in the system library in FIG. 2. Because the data producer creates the data of the data producer through the distributed data management service, and a data directory used by the data producer to search for the data is also generated by the distributed data management service, the proxy service deployed in the distributed data management service may obtain the data directory of the data producer more conveniently, and then access the data of the data producer in the same manner in which the data producer accesses the data of the data producer. It may be understood that an implementation of the proxy service is not limited to the manner shown in FIG. 4. In some implementations, the proxy service may alternatively be another module deployed in the system library and independent of the distributed data management service, or the proxy service may be deployed in another functional module in the system library. In this case, the proxy service may obtain the data directory of the data producer through the distributed data management service, and then access the data of the data producer based on the data directory.

Based on the data sharing system, embodiments of this application provide a data access method ①. In the method ①, the data consumer may access the data of the data producer through the proxy service, and does not need to start the data producer. This data access mode may also be referred to as a silent access mode. In the silent access mode, frequent startup of the data source application can be reduced or avoided, and then other problems such as high power consumption caused by frequently starting the data source application can be reduced.

In some implementations, the data consumer in the system may alternatively access the data of the data producer in a non-silent access mode (namely, a method ②), so that a data access mode can be flexibly controlled, and performance of the electronic device can be better improved. For example, when the data consumer accesses data of a data producer in a non-silent access mode, if the data producer stops running, the data consumer may switch the non-silent access mode to the silent access mode to continue to access the data of the data producer.

In some implementations, the data sharing system may include shared storage space. The shared storage space may be used to implement cross-application and cross-process communication, for example, implement communication between the data consumer and the proxy service, and implement communication between the data consumer and the data producer. A data sender may store, in the shared storage space, data that needs to be sent to a data receiver, and the data receiver obtains, from the shared storage space, the data sent by the data sender. It may be understood that, during actual application, cross-application and cross-process communication may alternatively be implemented in another manner, instead of necessarily depending on the shared storage space. In some implementations, when an amount of data that needs to be sent by the data sender is large, for example, greater than 1 MB (megabyte), the data sender may send the data to the data receiver by using the shared storage space. In some implementations, when the data consumer queries the data of the data producer, a query result returned by the proxy service or the data producer to the data consumer may include much data. Therefore, the proxy service or the data producer may store the query result in the shared storage space, and the data consumer may obtain the query result from the shared storage space.

In some implementations, the data consumer may include an SDK of the data producer, and at least some operations performed by the data consumer for accessing the data of the data producer may be performed by the SDK of the data producer. In some implementations, the data consumer and the SDK included in the data consumer may correspond to a same process.

The technical solutions of this application are described in detail below by using specific embodiments. The following several specific embodiments may be combined with each other, and a same or similar concept or process may not be described repeatedly in some embodiments.

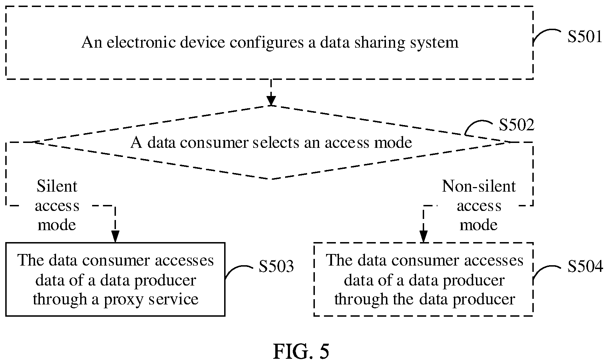

FIG. 5 is a flowchart of a data access method according to an embodiment of this application. It should be noted that the method is not limited to a specific sequence described in FIG. 5 and below. It should be understood that, in another embodiment, sequences of some steps in the method may be mutually exchanged according to an actual requirement, or some steps in the method may be omitted or deleted. The method includes the following steps.

S501: An electronic device configures a data sharing system.

The electronic device may configure the data sharing system shown in FIG. 4, so that the electronic device includes the data producer, the data consumer, and the proxy service, and the data consumer may access data of the data producer across applications through the proxy service or the data producer.

In some implementations, when the data consumer and the data producer are system applications, the electronic device may obtain the data consumer and the data producer from a server corresponding to an operating system. In some other implementations, when the data consumer and the data producer are third-party applications, the electronic device may obtain the data consumer and the data producer from a third-party server.

In some implementations, the data consumer may obtain an SDK of the data producer from the data producer or a server corresponding to the data producer.

In some implementations, the electronic device may obtain the proxy service from the server corresponding to the operating system in a system upgrade or update manner.

It should be noted that, during actual application, after completing configuration of the data sharing system, the electronic device may access data by performing the following steps a plurality of times, and does not need to perform S501 to configure the data sharing system each time the electronic device accesses the data. Alternatively, in some other implementations, configuration of the data sharing system is completed before the electronic device is delivered from a factory, and after the electronic device is powered on and started, there is no need to perform S501 to configure the data sharing system, in other words, S501 is an optional step.

S502: The data consumer selects an access mode when the data consumer accesses the data of the data producer. If the data consumer selects a silent access mode, S503 is performed; or if the data consumer selects a non-silent access mode, S504 is performed.

The data consumer may include a system application and/or a third-party application.

In some implementations, the data consumer may determine, based on a preset access mode selection strategy, to use the silent access mode or the non-silent access mode. In some implementations, the access mode selection strategy may be included in the SDK in the data consumer. In some implementations, the data consumer includes SDKs of a plurality of data producers, and the SDKs of the data producers may include different access mode selection strategies. When a same data consumer accesses different data producers, used access mode selection strategies and selected access modes may be the same or different. When different data consumers access a same data producer, used access mode selection strategies and selected access modes may be the same or different.

For example, the access mode selection strategy includes: determining, based on a type of the accessed data producer, to use the silent access mode or the non-silent access mode. Specifically, when the data producer is a system application, the silent access mode may be used; or when the data producer is a third-party application, the non-silent access mode may be used.

For example, the access mode selection strategy includes: determining, based on a security coefficient of the data producer or to-be-accessed data, to use the silent access mode or the non-silent access mode. Specifically, when the security coefficient corresponding to the data producer or the to-be-accessed data is less than a preset security coefficient threshold, the data producer or the to-be-accessed data does not have a high requirement on security. For example, if the data producer may be a Weather application, and the to-be-accessed data may be weather data, the silent access mode may be used, so that convenience of cross-application access is improved. Alternatively, when the security coefficient corresponding to the data producer or the to-be-accessed data is greater than or equal to a security coefficient threshold, the data producer and the to-be-accessed data have a high requirement on security. For example, if the data producer is Browser, and the to-be-accessed data is a browsing record related to user privacy, the non-silent access mode may be used, that is, the to-be-accessed data can be accessed through only the data producer, so that security of cross-application access is improved.

For example, the access mode selection strategy includes: determining, based on a type of to-be-accessed data, to use the silent access mode or the non-silent access mode. Specifically, when the to-be-accessed data is persistent data, because stability of the data is good, the data does not need to be processed before being fed back to the data consumer. In this case, the silent access mode may be used. When the to-be-accessed data is process data, stability of the data is poor, for example, a status of the data may be related to a running process of the data producer in real time. In this case, the non-silent access mode may be used.

Data stored in a memory may be the process data, and data stored in a storage device may be the persistent data. Because the persistent data is stored in the storage device, the persistent data is not lost even if the electronic device is powered off. The electronic device may store, in the storage device, the data in the memory, to implement data persistence. Certainly, the electronic device may store, in the memory, the data in the storage device, to convert the data into the process data.

For example, the access mode selection strategy includes: determining, based on a data access occasion or power consumption of the electronic device, to use the silent access mode or the non-silent access mode. Specifically, at night or when another electronic device is idle, because the electronic device is insensitive to power consumption in this case, the non-silent access mode is used. Alternatively, in daytime or when the another electronic device is busy, the electronic device further needs to reduce power consumption to achieve long-term standby and another objective, and therefore the silent access mode may be used.

For example, the access mode selection strategy includes: determining, based on a running status of the data producer, to use the silent access mode or the non-silent access mode. Specifically, when the data producer is not started, the silent access mode may be used, so that the data producer is not additionally started; or when the data producer is started and runs, the non-silent access mode is used.

For example, the access mode selection strategy includes: determining, based on a to-be-accessed data amount or access duration, to use the silent access mode or the non-silent access mode. Specifically, when the to-be-accessed data amount is large (that is, the data amount is greater than or equal to a specified data amount threshold) or estimated access duration is long (that is, the access duration is greater than or equal to a specified duration threshold), the non-silent access mode is used. Alternatively, when the to-be-accessed data amount is small (that is, the data amount is less than a specified data amount threshold) or estimated access duration is short (that is, the access duration is less than a specified duration threshold), the silent access mode is used.

For example, the access mode selection strategy includes: determining, based on a device resource status of the electronic device, to use the silent access mode or the non-silent access mode. Specifically, when a device resource is sufficient (that is, the device resource is greater than or equal to a specified threshold), the non-silent access mode is used. Alternatively, when a device resource is insufficient (that is, the device resource is less than a specified threshold), the silent access mode is used, so that the device resource is saved. The device resource may include a power resource, a processor resource, a memory resource, and other resources.

For example, the access mode selection strategy includes: determining, based on a running status of the electronic device, to use the silent access mode or the non-silent access mode. Specifically, when the electronic device is in a power saving state (or referred to as an energy saving state, an environmental protection state, or the like), the silent access mode is used, or when the electronic device is not in a power saving state, the non-silent access mode is used; or when the electronic device is in a full-screen mode (for example, playing a video or a game image in full screen), the silent access mode is used, or when the electronic device is in a non-full-screen mode, the non-silent access mode is used.

In some implementations, the access mode selection strategy includes: determining, based on two or more of a type of the data producer, a security coefficient corresponding to the data producer, a security coefficient corresponding to to-be-accessed data, a type of the to-be-accessed data, a running status of the data producer, a data access occasion, power consumption of the electronic device, to-be-accessed data amount, access duration, a device resource status, a running status of the electronic device, or the like, to use the silent access mode or the non-silent access mode.

For example, the access mode selection strategy includes: using the non-silent access mode when the data producer is a system application, the data producer is in a running state, and the type of the to-be-accessed data is persistent data; or using the silent access mode when the data producer is not a system application, the data producer is not in a running state, or the type of the to-be-accessed data is not persistent data.

S503: The data consumer accesses the data of the data producer through the proxy service.

The data consumer accesses the data of the data producer through the proxy service, that is, accesses the data of the data producer in the silent access mode. Because the proxy service has permission to reside in the electronic device and permission to access the data consumer, the data consumer may access the data of the data producer through the proxy service, and does not need to additionally start the proxy service or the data consumer. This reduces problems such as power consumption of the electronic device, and improves performance of the electronic device. When a quantity of times that the data consumer accesses the data in the silent access mode accounts for a larger proportion of a quantity of times that the data consumer accesses the data, power consumption of the electronic device can be reduced, and an effect of improving the performance of the electronic device is more obvious.

Power consumption and avoided by accessing the data in the silent access mode is included below. First, the proxy service has the permission to reside in the electronic device, and therefore does not need to be started or stopped. This avoids power consumption and performance generated by life cycle management and device resource allocation and reclaiming of the data producer that are caused by frequently starting the data producer. Second, one proxy service may be used to access data of a plurality of data producers. This further avoids power consumption and performance generated by life cycle management and device resource allocation and reclaiming that are of the plurality of data producers and that are caused by starting the plurality of data producers. Third, if an application carries a malicious file like a Trojan horse or a virus, damage caused to the electronic device when the application is started may be far greater than damage caused to the electronic device by data of the application. In this case, a unified access proxy is provided by the proxy service, so that damage that may be caused to the electronic device by the data producer can be reduced, and a risk of a malicious attack on the electronic device is reduced. This further ensures performance of the electronic device.

S504: The data consumer accesses the data of the data producer through the data producer.

The data consumer accesses the data of the data producer through the data producer, that is, accesses the data of the data producer in the non-silent access mode. The data consumer may start the data producer, so that the data producer is in a running state, and then the data consumer may access the data of the data producer through the data producer.

In this embodiment of this application, when the data consumer accesses the data of the data producer, the data consumer may select the silent access mode or the non-silent access mode to access the data of the data producer. This can reduce or prevent the data producer from being frequently started, thereby reducing problems such as power consumption of the electronic device, and improving performance of the electronic device. In addition, non-silent data access can also be compatible, thereby improving flexibility and reliability of data access.

In some implementations, the data consumer may be configured to access the data of the data producer only in the silent access mode, including that the electronic device supports only the silent access mode. Therefore, S502 is an optional step, and may be omitted. In addition, when S502 is omitted, S504 may also be omitted.

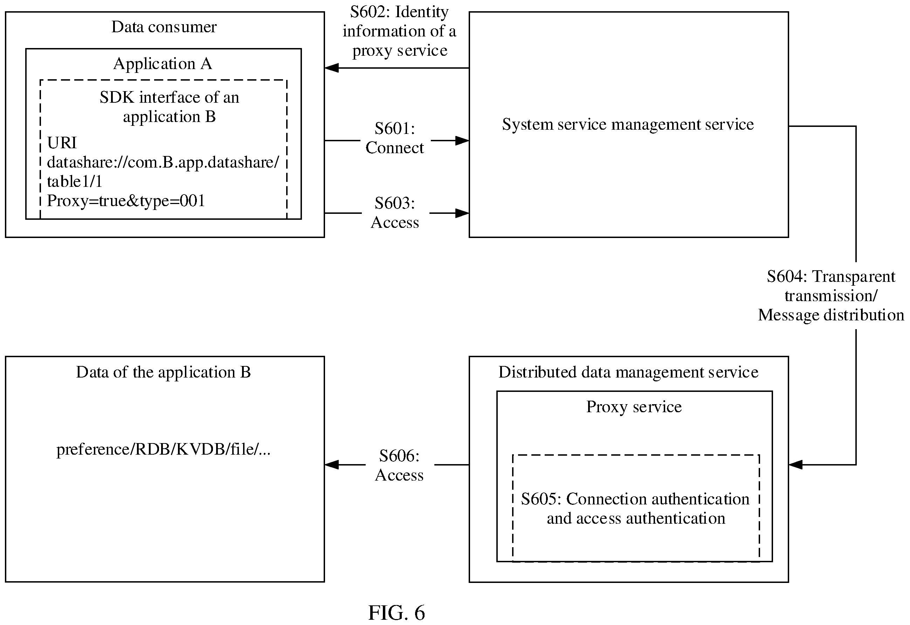

FIG. 6 is a flowchart of a data silent access method according to an embodiment of this application. The method may be a specific description of S503. An application A may be the data consumer, an application B may be the data producer, and the proxy service is a system service and has high system permission, including that the proxy service has permission to directly access the data producer and permission to reside in the electronic device. It should be noted that the method is not limited to a specific sequence described in FIG. 6 and below. It should be understood that, in another embodiment, sequences of some steps in the method may be mutually exchanged according to an actual requirement, or some steps in the method may be omitted or deleted. The method includes the following steps.

S601: The application A sends a request to a system service management service to connect to the proxy service.

That the application A requests to connect to the proxy service may also be understood as that the application A requests to communicate with the proxy service.

In some implementations, the application A may send a message 1 to the system service management service, where the message 1 is used to request to connect to the proxy service.

S602: The system service management service returns identity information of the proxy service to the application A.

The identity information of the proxy service may include at least one of a process identifier, a service identifier, and a communication address that correspond to the proxy service. Certainly, during actual application, the identity information of the proxy service may also include other information that can be used to implement communication between the application A and the proxy service.

In some implementations, when receiving the message 1, the system service management service may obtain the identity information of the proxy service, and return the identity information to the application A.

In some implementations, the system service management service may send a message 2 to the application A, and the message 2 carries the identity information of the proxy service.

S601 and S602 are performed, so that reliability of communication between the application A and the proxy service can be improved, and further reliability of data access is ensured.

S603: The application A sends a message 3 to the system service management service, where the message 3 is used to request to access data of the application B.

The application A may communicate with the proxy service based on the identity information of the proxy service, including sending the message 3 to the proxy service through the system service management service.

The message 3 may include feature information of the to-be-accessed data, and the feature information may indicate a feature of the to-be-accessed data, in other words, indicate the data that needs to be accessed. In some implementations, the feature information may indicate at least one of a type of the to-be-accessed data, a name of the to-be-accessed data, an ID of the to-be-accessed data, and the like. Certainly, during actual application, the feature information may further indicate more or fewer features related to the to-be-accessed data. Specific content indicated by the feature information is not limited in this embodiment of this application.

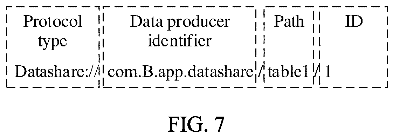

In some implementations, the feature information of the to-be-accessed data includes a URI of the to-be-accessed data. A URI "datashare://com.B.app.datashare/table1/1" shown in FIG. 7 is used as an example. The URI may include a protocol type "Datashare", where the protocol type may indicate a meaning represented by each field in the URI. In some implementations, the URI may also include other protocol types, such as "content"; a data producer identifier "com.B.app.datashare", where the data producer identifier may indicate data from which application the to-be-accessed data is; a path "table1", where the path may indicate a location of the to-be-accessed data, and is an optional item; and an ID "1" may indicate an identifier value of the to-be-accessed data, and is an optional item. The URI may indicate data that is accessed from the application B and whose ID is 1 in table1.

The message 3 may further include at least one control parameter, and the at least one control parameter may be used to control a specific data access process. The at least one control parameter may be carried in the URI, or may be independent of the URI. Certainly, during actual application, the application A may alternatively send the feature information of the to-be-accessed data and the at least one control parameter to the proxy service by using a plurality of messages.

In some implementations, the at least one control parameter includes an operation type identifier. The operation type identifier may be used to describe a specific operation manner of the to-be-accessed data. The operation manner may be adding data, deleting data, modifying data, or querying data.

In some implementations, the at least one control parameter includes a silence identifier, and the silence identifier may indicate that current access is silent access. The silence identifier may be represented by a character or a character string. For example, the silence identifier is "Proxy=true" or "Proxy=1". It may be understood that, during actual application, the silence identifier may alternatively be represented by another character or character string, and is not limited to "Proxy=true" or "Proxy=1".

In some implementations, the at least one control parameter includes a database type, to indicate a database type corresponding to the to-be-accessed data. In some implementations, the database type may be preference, a relational database (relational database, RDB), a KVDB, or a file. Certainly, during actual application, the database type may be another type.

Preference is a lightweight key-value pair database. A key-value pair includes a key and a corresponding value. In some implementations, a type of a key is a character string (String), and a type of a value includes an integer (int), a character string (String), Boolean (Boolean), a float (float), and a long (long) integer, a character string set (Set<String>), or the like. Certainly, during actual application, types of the key and the value may alternatively include other types.

The RDB is a type of database that can store a plurality of pieces of related data in a form of a data table.

The KVDB is a key-value pair database. The KVDB may be deployed in a single-node system or a cluster.

The file is also referred to as a file storage. The file storage can store stored data in a file without any formatting. In some implementations, the file storage may be used to store binary data, text data, and the like.

S604: The system service management service sends the message 3 to the proxy service through transparent transmission, message distribution, or in another manner.

It should be noted that, during actual application, communication between the application A and the proxy service may alternatively be implemented in another manner.

S605: The proxy service performs connection authentication and access authentication on the application A.

When the proxy service receives the message 3, the proxy service performs connection authentication on the application A, to ensure that the application A on which the connection authentication succeeds has permission to connect to the proxy service and/or the application B; and performs access authentication on the application A, to ensure that the application A on which the access authentication succeeds has permission to access the proxy service and/or the application B. The connection authentication and the access authentication are performed on the application A, so that security of data access behavior can be ensured.

In some implementations, when the proxy service performs the connection authentication on the application A, the proxy service may detect whether a configuration file of the application A includes first permission information. If the configuration file of the application A includes the first permission information, it may be determined that the connection authentication succeeds; or if the configuration file of the application A does not include the first permission information, it is determined that the connection authentication fails. In some implementations, the first permission information may indicate that the application A has permission to connect to the application B. In some implementations, the first permission information may indicate that the application A has permission to connect to the proxy service. In some implementations, the first permission information may indicate that the application A has permission to connect to the proxy service and the application B.

It should be noted that the first permission information may be added to the configuration file of the application A in advance by a developer of the application A. Certainly, the application A may alternatively obtain the first permission information in another manner, and add the first permission information to the configuration file. A manner in which the application A obtains the first permission information is not limited in this embodiment of this application.

In some implementations, when the proxy service performs the access authentication on the application A, the proxy service may detect whether the configuration file of the application A includes second permission information and whether a configuration file of the application B includes third permission information corresponding to the second permission information. The second permission information may declare permission to access the application B, and the third permission information may indicate that the application B defines the permission declared by the second permission information. If the second permission information and the corresponding third permission information are detected, it may be determined that the access authentication on the application A succeeds; or if the second permission information and the corresponding third permission information are not detected, it is determined that the access authentication on the application A fails.

In some implementations, if the application A requests to add data to, delete data from, or modify data in the application B, when determining that the second permission information declares that the application A has permission to write data to the application B, and the third permission information declares that the application B defines the permission to write data, the proxy service may determine that the access authentication on the application A succeeds, in other words, the application A has the permission to write data to the application B.

In some implementations, if the application A requests to query data from the application B, when determining that the second permission information declares that the application A has permission to read data from the application B, and the third permission information declares that the application B defines the permission to read data, the proxy service may determine that the access authentication on the application A succeeds, in other words, the application A has the permission to read data from the application B.

It should be noted that the application A may obtain, in advance, the permission declared by the second permission information, and store the second permission information in the configuration file of the application A. In some implementations, if the application A is a system application, when the application A applies to the application B for the permission, an operating system of the electronic device may grant the permission to the application A without user participation. Alternatively, if the application A is a third-party application, when the application A applies to the application B for the permission, the application B may present an authorization request of the application A to a user, and when receiving an authorization operation of the user based on the authorization request, grant, to the application A, the permission requested by the authorization request, or when receiving an authorization refusal operation of the user based on the authorization request, refuse to grant, to the application A, the permission requested by the authorization request. Certainly, during actual application, the application A may alternatively obtain, in another manner, the permission declared by the second permission information.

In some implementations, when the proxy service performs the access authentication on the application A, the proxy service may detect whether the configuration file of the application A includes second permission information and whether a configuration file of the proxy service includes fourth permission information corresponding to the second permission information. The second permission information may declare permission to access the proxy service, and the fourth permission information may indicate that the proxy service defines the permission declared by the second permission information. If the second permission information and the fourth permission information are detected, it may be determined that the access authentication on the application A succeeds; or if the second permission information and the fourth permission information are not detected, it is determined that the access authentication on the application A fails.

It should be noted that, in S605, the proxy service may alternatively perform connection authentication and access authentication in another manner.

It should be further noted that S605 in which the proxy service performs connection authentication and access authentication on the application A is an optional step, and at least some operations in S605 may be omitted, that is, no connection authentication may be performed on the application A and/or no access authentication may be performed on the application A. The connection authentication and/or the access authentication are/is omitted, so that access efficiency can be improved.

S606: The proxy service accesses the data of the application B in response to the message 3.

The proxy service may access the data of the application B based on the feature information such as the URI carried in the message 3. In some implementations, the proxy service may determine, based on a data directory corresponding to the application B, a storage location of the to-be-accessed data, and then access the to-be-accessed data at the storage location. In some implementations, the proxy service may obtain, from a data directory based on the feature information such as the URI carried in the message 3, a storage location of the to-be-accessed data. In some implementations, the message 3 carries the operation type, the database type, and the feature information of the to-be-accessed data, and the proxy service may perform, in a database indicated by the database type, an operation indicated by the operation type on data corresponding to the URI.

In some implementations, if the proxy service is a subservice in the distributed data management service, the proxy service obtains the data directory of the application B from data of the proxy service. In some other implementations, if the proxy service is a service independent of the distributed data management service, the proxy service may communicate with the distributed data management service, to obtain the data directory of the application B from the distributed data management service.

In some implementations, the proxy service may further send a message 4 to the application A through the system service management service, where the message 4 may be used as a response to the message 3, to return an access result to the application A. The access result may indicate a result obtained after access is performed based on the message 3. In some implementations, the proxy service may actively return the access result to the application A after performing S606. In some implementations, the proxy service may not actively return the access result to the application A, but the application A sends a message 9 to the proxy service. The message 9 may be used to query an access result corresponding to the message 3. When receiving the message 9, the proxy service returns the access result to the application A. That is, when the application A queries the access result from the proxy service, the proxy service returns the access result to the application A.

In this embodiment of this application, the proxy service is the system service and has the high system permission, including that the proxy service has the permission to directly access the data producer and the permission to reside in the electronic device. Therefore, the application A may access the data of the application B through the proxy service. In this way, the application B does not need to be started, and power consumption and performance of the electronic device are avoided.

It should be noted that, during actual application, the application B may alternatively be connected to the proxy service in another manner. For example, in some other operating systems, the application B may alternatively be connected to the proxy service through a system service other than the system service management service.

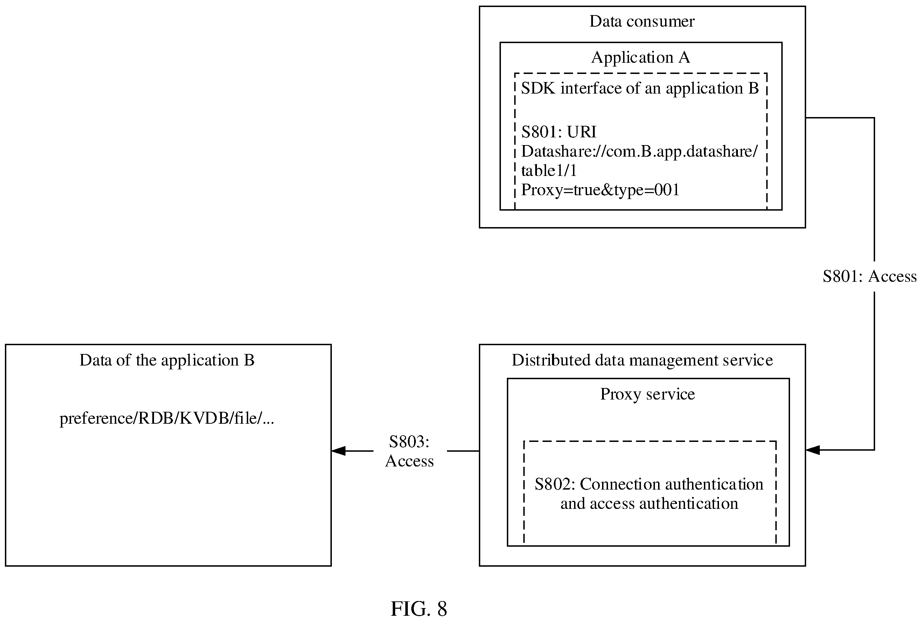

FIG. 8 is a flowchart of a data silent access method according to an embodiment of this application. The method may be a specific description of S503. An application A may be the data consumer, an application B may be the data producer, and the proxy service is a system service and has high system permission, including that the proxy service has permission to directly access the data producer and permission to reside in the electronic device. It should be noted that the method is not limited to a specific sequence described in FIG. 8 and below. It should be understood that, in another embodiment, sequences of some steps in the method may be mutually exchanged according to an actual requirement, or some steps in the method may be omitted or deleted. The method includes the following steps.

S801: The application A sends a message 3 to a system service management service, where the message 3 is used to request to access data of the application B.

S802: The proxy service performs connection authentication and access authentication on the application A.

S802 in which the proxy service performs connection authentication and access authentication on the application A is an optional step, and at least some operations in S802 may be omitted, that is, no connection authentication may be performed on the application A and/or no access authentication may be performed on the application A. This can improve access efficiency.

S803: The proxy service accesses the data of the application B in response to the message 3.

It should be noted that, for implementations of S801 to S803, refer to related descriptions in S603, S605, and S606.

In some implementations, the proxy service may return an access result to the application B.

In this embodiment of this application, the application B may directly communicate with the proxy service, so that efficiency of cross-application data access is further improved.

The following describes, with reference to specific examples, the data silent access method provided in this embodiment of this application.

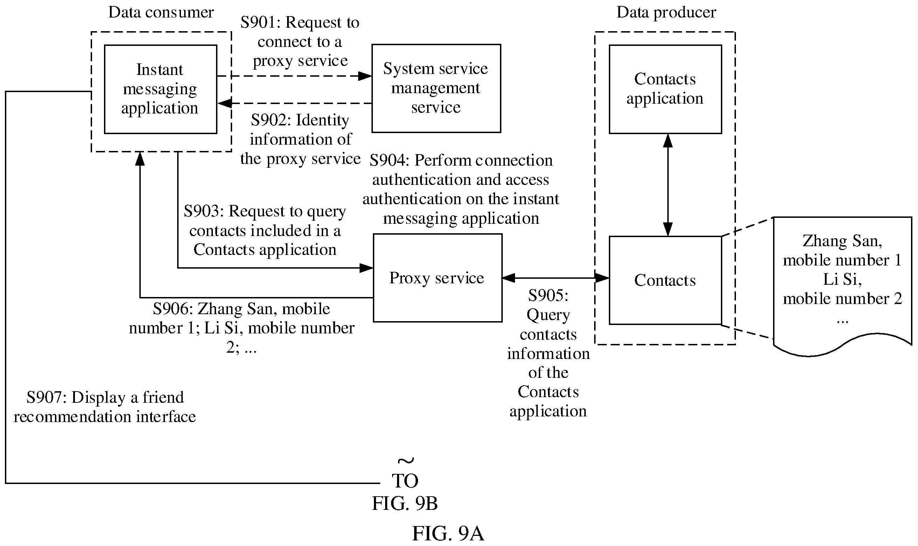

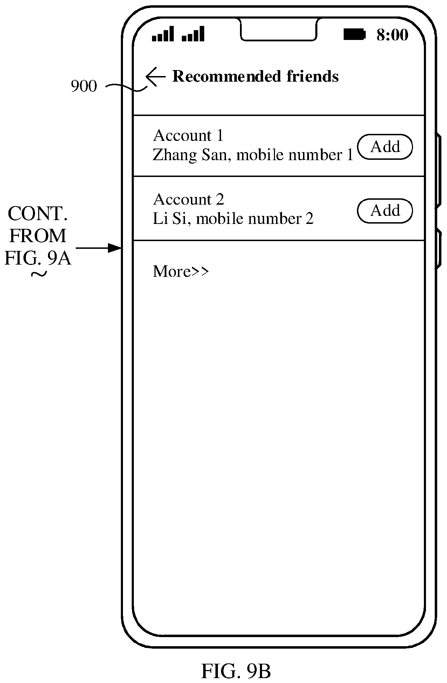

As shown in FIG. 9A and FIG. 9B, the application A is an instant messaging application and is a third-party application, the application B is a Contacts application and is a system application, and data of the Contacts application includes a plurality of contacts such as " Zhang San, mobile number 1; Li Si, mobile number 2; ...". The instant messaging application may access the data of the Contacts application according to a method shown in FIG. 9A and FIG. 9B.

S901: A process 1 of the instant messaging application sends a request to a process 2 of the system service management service to connect to the proxy service.

S902: The process 2 of the system service management service returns identity information of the proxy service to the process 1 of the instant messaging application.

In some implementations, the identity information of the proxy service returned by the process 2 to the process 1 may include a process ID of a process 3 of the proxy service.

In some implementations, because the proxy service can reside in the electronic device, provided that the instant messaging application obtains the identity information of the proxy service, the instant messaging application may communicate with the proxy service based on the identity information at any moment. Therefore, S901 and S902 may be omitted, so that access efficiency is improved.

S903: The process 1 of the instant messaging application sends a request to the process 3 of the proxy service to query contacts included in the Contacts application.

In some implementations, the process 1 may communicate with the process 3 based on the identity information such as the process ID of the process 3.

S904: The process 3 of the proxy service performs connection authentication and access authentication on the instant messaging application, and performs S905 when the authentication succeeds.

In some implementations, at least an operation in S904 may be omitted, including performing no connection authentication on the instant messaging application or performing no access authentication on the instant messaging application. This further improves access efficiency.

S905: The process 3 of the proxy service queries, from the data of the Contacts application, the contacts included in the Contacts application.

The contacts found in the process 3 may include the plurality of contacts such as "Zhang San, mobile number 1; Li Si, mobile number 2; ...".

S906: The process 3 of the proxy service returns a query result to the process 1 of the instant messaging application, where the query result includes the plurality of found contacts such as "Zhang San, mobile number 1; Li Si, mobile number 2; ...".

S907: The process 1 of the instant messaging application displays a friend recommendation interface.

The process 1 may obtain, from a server corresponding to the instant messaging application, accounts corresponding to the contacts based on the plurality of found contacts, and display the friend recommendation interface 900. The friend recommendation interface 900 includes the accounts corresponding to the contacts, including an account 1 corresponding to Zhang San, an account 2 corresponding to Li Si, and the like. The account 1 corresponding to Zhang San is used as an example. When a user taps an Add button on a right side of the account 1, the process 1 may send a friend request to the server corresponding to the instant messaging application, to add the account 1 to a friend list.

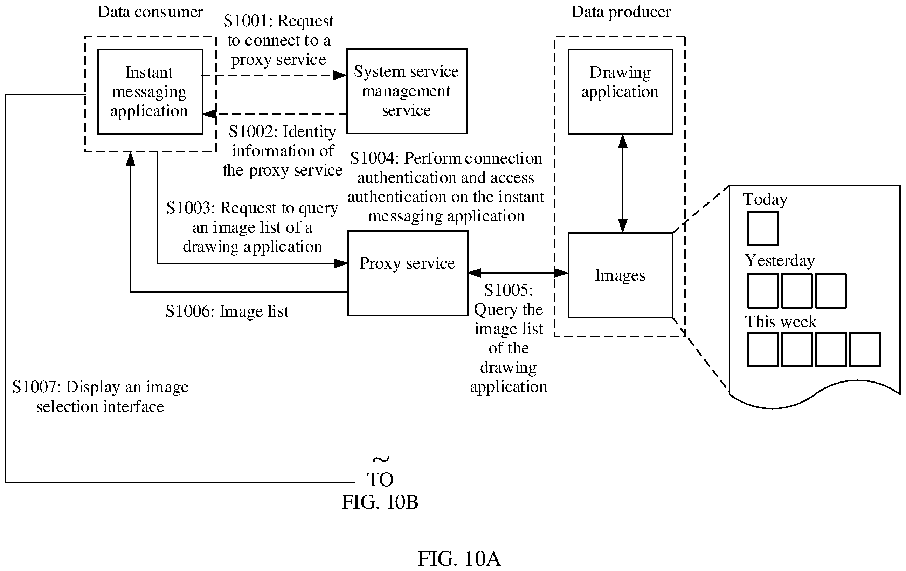

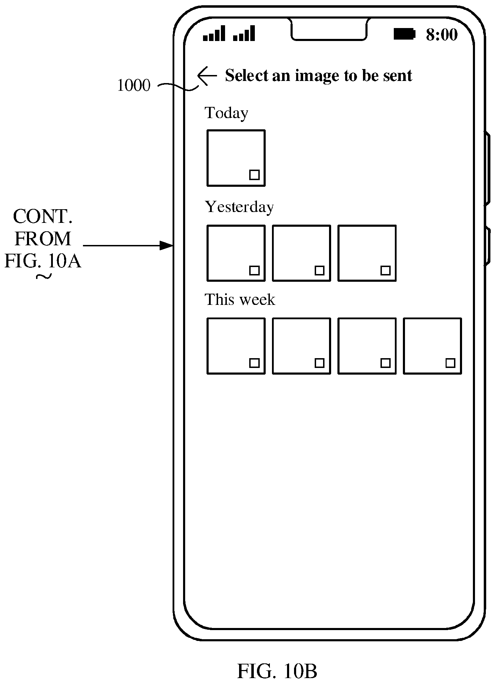

As shown in FIG. 10A and FIG. 10B, the electronic device further includes an application C that is used as the data producer, the application C is a drawing application and is a third-party application, and data of the drawing application includes a plurality of images. The instant messaging application may access the data of the drawing application according to a method shown in FIG. 10A and FIG. 10B.

S1001: A process 1 of the instant messaging application sends a request to a process 2 of the system service management service to connect to the proxy service.

S1002: The process 2 of the system service management service returns identity information of the proxy service to the process 1 of the instant messaging application.

In some implementations, because the proxy service can reside in the electronic device, provided that the instant messaging application obtains the identity information of the proxy service, the instant messaging application may communicate with the proxy service based on the identity information at any moment. Therefore, S1001 and S1002 may be omitted, so that access efficiency is improved.

S1003: The process 1 of the instant messaging application sends a request to a process 3 of the proxy service to query an image list of the drawing application.

S1004: The process 3 of the proxy service performs connection authentication and access authentication on the instant messaging application, and performs S1005 when the authentication succeeds.

In some implementations, at least some operations in S1004 may be omitted, including performing no connection authentication on the instant messaging application and/or performing no access authentication on the instant messaging application. This further improves access efficiency.

S1005: The process 3 of the proxy service queries the image list of the drawing application from the data of the drawing application.

The image list is arranged from latest to earliest based on storage time, for example, one image stored in "Today", three images stored in "Yesterday", and four images stored in "This week".

S1006: The process 3 of the proxy service returns a query result to the process 1 of the instant messaging application, where the query result includes the found image list.

S1007: The process 1 of the instant messaging application displays an image selection interface.

The process 1 may display the image selection interface 1000 based on the obtained image list. The image selection interface 1000 includes the image list, so that the user selects an image to be sent to a friend.

It can be learned with reference to FIG. 9A and FIG. 9B and FIG. 10A and FIG. 10B that, in the silent access mode, the process 1 of the instant messaging application accesses the data of the Contacts application and the data of the drawing application through the process 3 of the proxy service, and neither the Contacts application nor the drawing application that is used as the data producer is started in a silent-mode process. In addition, the proxy service performs column authentication like connection authentication and access authentication on the instant messaging application, that is, the proxy service ensures security of cross-application access.

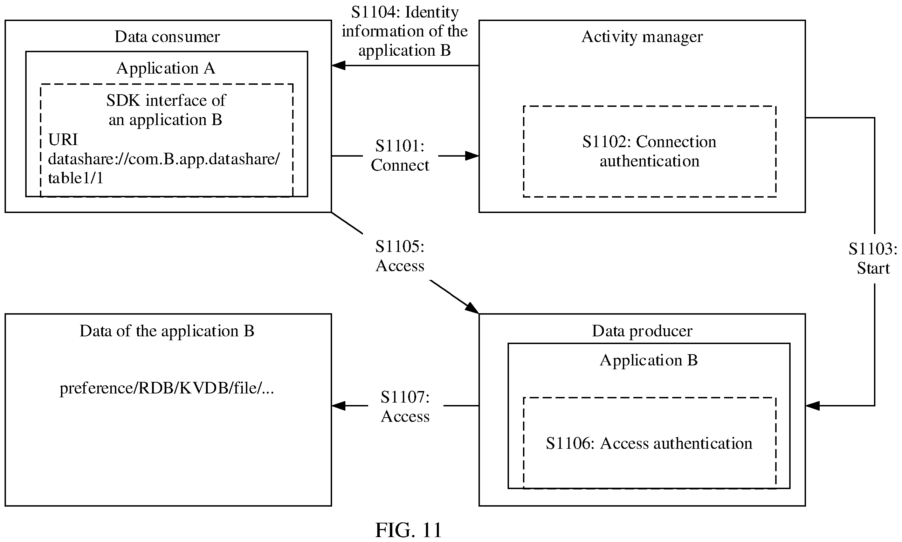

FIG. 11 is a flowchart of a data non-silent access method according to an embodiment of this application. The method may be a specific description of S504. An application A may be the data consumer, and an application B may be the data producer. It should be noted that the method is not limited to a specific sequence described in FIG. 11 and below. It should be understood that, in another embodiment, sequences of some steps in the method may be mutually exchanged according to an actual requirement, or some steps in the method may be omitted or deleted. The method includes the following steps.

S1101: The application B sends a request to an activity manager to connect to the application B.

The application B requests to connect to the application B, that is, the application requests to communicate with the application B.

The application B may request to send a message 5 to the activity manager, where the message 5 is used to request to connect to the application B.

S1102: The activity manager performs connection authentication on the application A.

When receiving the message 5, the activity manager may perform the connection authentication on the application A, to ensure that the application A on which the connection authentication succeeds has permission to connect to the application B, so that access security is improved.

In some implementations, the activity manager may detect whether a configuration file of the application A includes first permission information. If the configuration file of the application A includes the first permission information, it may be determined that the connection authentication succeeds; or if the configuration file of the application A does not include the first permission information, it is determined that the connection authentication fails. In some implementations, the first permission information may indicate that the application A has the permission to connect to the application B.

It should be noted that, in S1102, the activity manager may alternatively perform connection authentication in another manner.

It should be further noted that S1102 is an optional step, in other words, no connection authentication may be performed on the application A. In this way, access efficiency can be improved.

S1103: The activity manager starts the application B.

The activity manager may start the application B, so that the application A can communicate with the application B, to access data of the application B.

In some implementations, the activity manager may detect whether the application B is already in a running state. If the application B is not in the running state, the activity manager starts the application B. Alternatively, if the application B is already in the running state, S1104 may be performed.

S1104: The activity manager returns identity information of the application B to the application B.

The identity information of the application B may include at least one of a corresponding process identifier, a corresponding service identifier, and a corresponding communication address. Certainly, during actual application, the identity information may also include other information that can be used to implement communication between the application A and the application B.

In some implementations, the activity manager may send a message 6 to the application B, where the message 6 carries the identity information of the application B.

S1105: The application B sends a message 7 to the application B, where the message 7 is used to request to access the data of the application B.

The application B may communicate with the application B based on the identity information of the application B, including sending the message 7 to the application B.

The message 7 may include feature information of to-be-accessed data.

The message 7 may further include at least one control parameter. In addition, it should be noted that, during actual application, the application A may alternatively send the feature information of the to-be-accessed data and the at least one control parameter to the application B by using a plurality of messages.

In some implementations, the at least one control parameter includes an operation type identifier. The operation type identifier may be used to describe an operation manner of data during data access. The operation manner may be adding data, deleting data, modifying data, or querying data.

In some implementations, the at least one control parameter includes a non-silence identifier, and the non-silence identifier may indicate that current access is non-silent access. The non-silence identifier may be represented by a character or a character string. For example, the silence identifier is "Proxy=false" or "Proxy=0". It may be understood that, during actual application, the non-silence identifier may alternatively be represented by another character or character string, and is not limited to "Proxy=false" or "Proxy=0".

In some implementations, the at least one control parameter includes a database type, to indicate a database type corresponding to the to-be-accessed data. In some implementations, the database type may be preference, an RDB, a KVDB, or a file. Certainly, during actual application, the database type may be another type.

S1106: The application B performs access authentication on the application A.

When receiving the message 7, a proxy service performs the access authentication on the application A. This can ensure that the application A on which the access authentication succeeds has permission to access the application B, so that access security is improved.

In some implementations, the proxy service may detect whether the configuration file of the application A includes second permission information and whether a configuration file of the application B includes third permission information corresponding to the second permission information. The second permission information may declare permission to access the application B, and the third permission information may indicate that the application B defines the permission declared by the second permission information. If the second permission information and the corresponding third permission information are detected, it may be determined that the access authentication on the application A succeeds; or if the second permission information and the corresponding third permission information are not detected, it is determined that the access authentication on the application A fails.

It should be noted that, in S1106, the application B may alternatively perform access authentication in another manner.

It should be further noted that S1106 is an optional step, in other words, no access authentication may be performed on the application A. In this way, access efficiency can be further improved.

S1107: The application B accesses the data of the application B in response to the message 7.

The application B may access the data of the application B based on a URI and the at least one control parameter that are carried in the message 7. For a manner in which the application B performs S1101 of accessing the data of the application B in response to the message 7, refer to related descriptions in S606 of accessing the data of the application B in response to the message 3.

In some implementations, the application B may send a message 8 to the application A, where the message 8 may be used as a response to the message 7, to return an access result to the application A.

The following describes, with reference to specific examples, the data non-silent access method provided in this embodiment of this application.

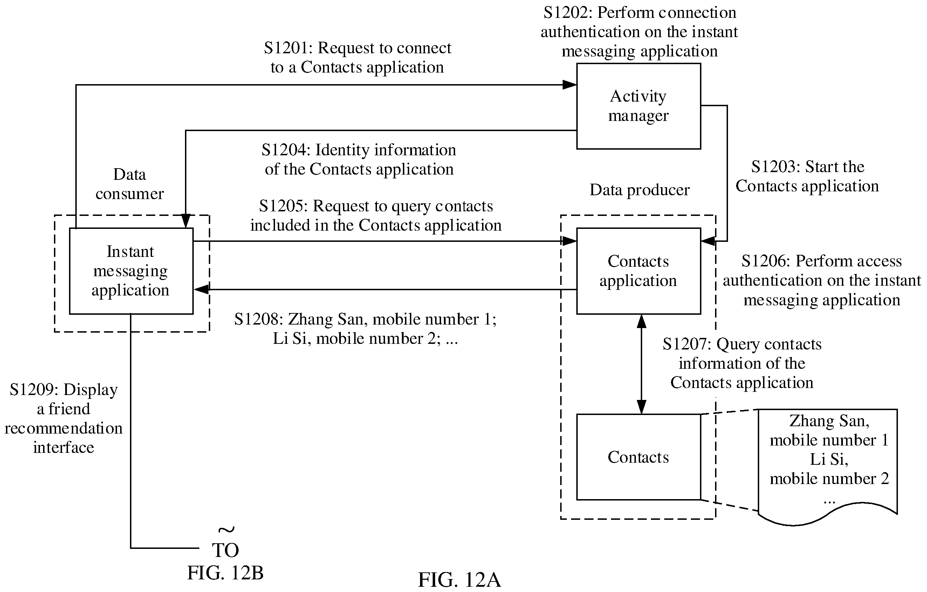

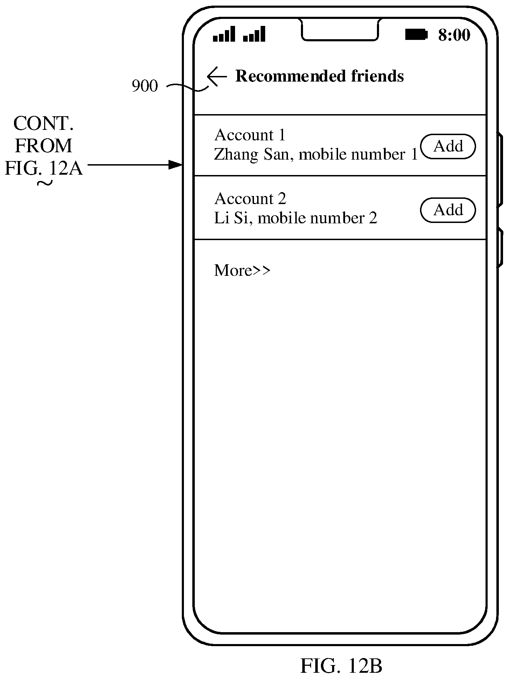

As shown in FIG. 12A and FIG. 12B, the application A is an instant messaging application and is a third-party application, the application B is a Contacts application and is a system application, and data of the Contacts application includes a plurality of contacts such as " Zhang San, mobile number 1; Li Si, mobile number 2; ...". The instant messaging application may access the data of the Contacts application according to a method shown in FIG. 12A and FIG. 12B.

S1201: A process 1 of the instant messaging application sends a request to a process 4 of the activity manager to connect to the Contacts application.

S1202: The process 4 of the activity manager performs connection authentication on the instant messaging application, and performs S1203 when the authentication succeeds.

In some implementations, S1202 may be omitted, so that access efficiency is improved.

S1203: The process 4 of the activity manager starts a process 5 of the Contacts application.

S1204: The process 4 of the activity manager returns identity information of the Contacts application to the process 1 of the instant messaging application.

In some implementations, the identity information of the proxy service returned by the process 4 to the process 1 may include a process ID of the process 5 of the Contacts application.

It should be noted that, because the Contacts application is not a system service, the Contacts application cannot reside in the electronic device. In this case, when accessing the data of the Contacts application, the instant messaging application cannot determine whether the Contacts application is currently running. In this way, S1201, S1203, and S1204 need to be performed, so that the instant messaging application is connected to the Contacts application. That is, S1201, S1203, and S1204 cannot be omitted.

S1205: The process 1 of the instant messaging application sends a request to the process 5 of the Contacts application to query contacts included in the Contacts application.

In some implementations, the process 1 may communicate with the process 5 based on the process ID of the process 5.

S1206: The process 5 of the Contacts application performs access authentication on the instant messaging application, and performs S1207 when the authentication succeeds.

In some implementations, S1206 may be omitted, so that access efficiency is improved.

S1207: The process 5 of the Contacts application queries, from the data of the Contacts application, the contacts included in the Contacts application.

The contacts found in the process 5 may include the plurality of contacts such as "Zhang San, mobile number 1; Li Si, mobile number 2; ...".

S1208: The process 5 of the Contacts application returns a query result to the process 1 of the instant messaging application, where the query result includes the plurality of found contacts such as "Zhang San, mobile number 1; Li Si, mobile number 2; ...".

S1209: The process 1 of the instant messaging application displays a friend recommendation interface.

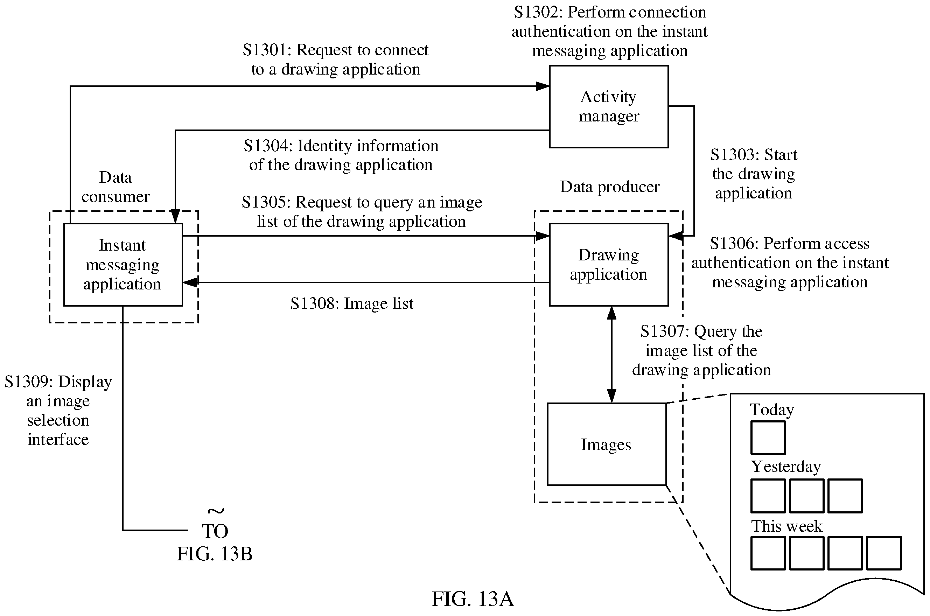

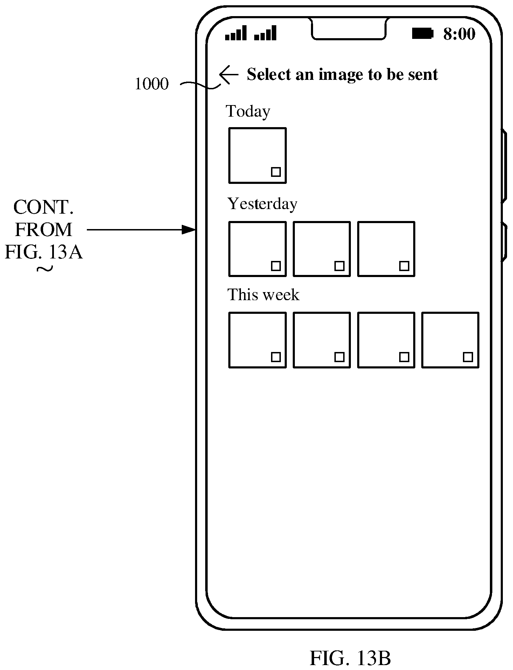

As shown in FIG. 13A and FIG. 13B, the electronic device further includes an application C that is used as the data producer, the application C is a drawing application and is a third-party application, and data of the drawing application includes a plurality of images. The instant messaging application may access the data of the drawing application according to a method shown in FIG. 13A and FIG. 13B.

S1301: A process 1 of the instant messaging application sends a request to a process 4 of the activity manager to connect to the drawing application.

S1302: The process 4 of the activity manager performs connection authentication on the instant messaging application, and performs S1303 when the authentication succeeds.

In some implementations, S1302 may be omitted, so that access efficiency is improved.

S1303: The process 4 of the activity manager starts a process 6 of the drawing application.

S1304: The process 4 of the activity manager returns identity information of the drawing application to the process 1 of the instant messaging application.

In some implementations, the identity information of the proxy service returned by the process 4 to the process 1 may include a process ID of the process 6 of the drawing application.

It should be noted that, because the drawing application is not a system service, the drawing application cannot reside in the electronic device. In this case, when accessing the data of the drawing application, the instant messaging application cannot determine whether the drawing application is currently running. In this way, S1301 and S1302 to S1304 need to be performed, so that the instant messaging application is connected to the drawing application. That is, S1301 and S1302 to S1304 cannot be omitted.

S1305: The process 1 of the instant messaging application sends a request to a process 5 of the drawing application to query an image list of the drawing application.

S1306: The process 6 of the drawing application performs access authentication on the instant messaging application, and performs S1307 when the authentication succeeds.

In some implementations, S1306 may be omitted, so that access efficiency is improved.

S1307: The process 6 of the drawing application queries the image list from the data of the drawing application.

S1308: The process 6 of the drawing application returns the image list to the process 1 of the instant messaging application.

S1309: The process 1 of the instant messaging application displays an image selection interface.

It can be learned with reference to FIG. 12A and FIG. 12B and FIG. 13A and FIG. 13B that, in the non-silent access mode, the process 1 of the instant messaging application needs to be first connected to the process 5 of the Contacts application through the process 4 of the activity manager, and then access the data of the Contacts application through the process 5 of the Contacts application; or the process 1 of the instant messaging application needs to be first connected to the process 6 of the drawing application through the process 4 of the activity manager, and then access the data of the drawing application through the process 6 of the drawing application. In addition, the connection authentication and the access authentication performed on the instant messaging application are completed by using different processes, including that the activity manager performs the connection authentication, and the process 5 of the to-be-accessed Contacts application or the process 6 of the to-be-accessed drawing application performs the access authentication, that is, the activity manager and the process of the to-be-accessed application jointly ensure security of cross-application access.

It can be learned, by comparing FIG. 9A and FIG. 9B and FIG. 10A and FIG. 10B with FIG. 12A and FIG. 12B and FIG. 13A and FIG. 13B, that all or some of the following differences between the silent access mode and non-silent access mode may be included.

Difference 1: Different media are used to implement cross-application access. In the silent access mode, the data consumer accesses data of one or more data producers through the proxy service. However, in the non-silent access mode, the data consumer accesses data of each data producer through one or more data producers.

Difference 2: Different device resources are required for implementing cross-application access. One data consumer is used as an example. In the silent access mode, a process of the data consumer can access data of a plurality of data producers provided that the process of the data consumer communicates with a process of a proxy service. A minimum total quantity of processes required for performing cross-application access on data of M data producers by N data consumers is N+1, where "1" is the process of the proxy service, and a total quantity of processes is irrelevant to a quantity M of to-be-accessed data producers. In the non-silent access mode, a process of the data consumer needs to communicate with a process of each data producer, to access data of each data producer. A minimum total quantity of processes required for performing cross-application access on data of M data producers by N data consumers is N+M+1, where "1" is a process of the activity manager. A device resource required for managing the N+1 processes by the electronic device is less than a device resource required for managing the N+M+1 processes.

Difference 3: Different authentication modes are performed on the data consumer. In the silent access mode, the proxy service performs connection authentication and access authentication on the data consumer. However, in the non-silent access mode, the activity manager performs connection authentication on the data consumer, and the to-be-accessed data producer performs access authentication on the data consumer.

Difference 4: Amounts of operations performed for implementing cross-application access are different. In the silent access mode, because the proxy service has high system permission and can reside in the electronic device, the step of connecting the data consumer to the proxy service may be omitted. However, in the non-silent access mode, because the data consumer needs to access data of the data producer through the data producer, and the data producer cannot reside in the electronic device, the step of connecting the data consumer to the data producer cannot be omitted. That is, efficiency of the silent access mode may be higher than efficiency of the non-silent access mode.

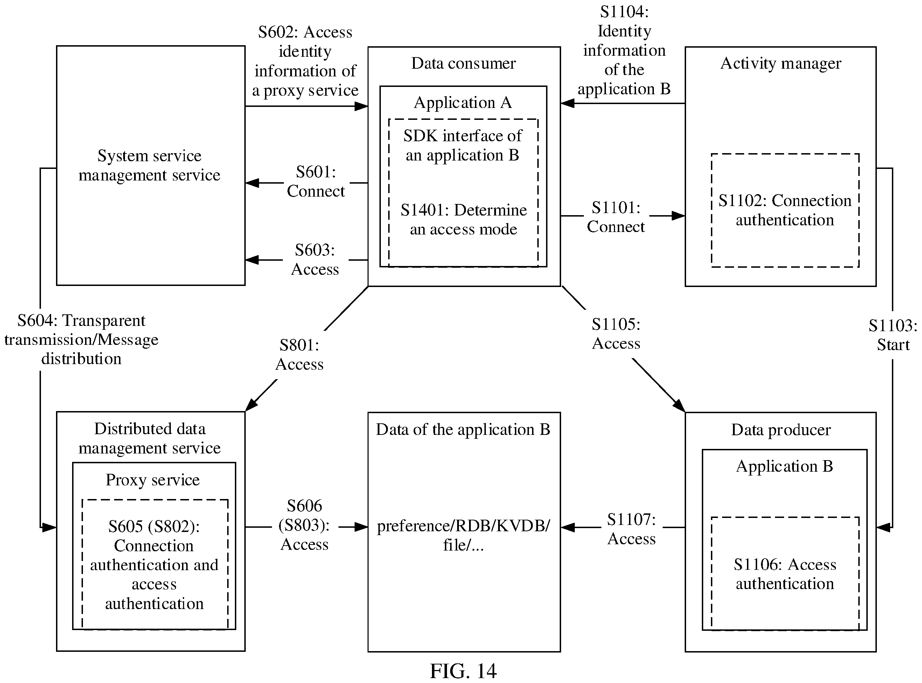

FIG. 14 is a flowchart of a data access method according to an embodiment of this application. The method shown in FIG. 14 may be a combination of the methods shown in FIG. 6, FIG. 8, and FIG. 11. An application A may be a data consumer, an application B may be a data producer, and a proxy service is a system service and has high system permission, including that the proxy service has permission to directly access the data producer and permission to reside in an electronic device. It should be noted that the method is not limited to a specific sequence described in FIG. 14 and below. It should be understood that, in another embodiment, sequences of some steps in the method may be mutually exchanged according to an actual requirement, or some steps in the method may be omitted or deleted. The method includes the following steps.

S1401: When the application A accesses data of the application B, the application A determines whether an access mode is a silent access mode or a non-silent access mode.

If the application A determines that the access mode is the silent access mode, but does not determine identity information of the proxy service, the application A may perform S601, and then perform S601 to S606 shown in FIG. 6. That is, the application A may first obtain the identity information of the proxy service, and then access the data of the application B through the proxy service.

If the application A determines that the access mode is the silent access mode, and determines identity information of the proxy service, the application A may perform S801, and then perform S801 to S803 shown in FIG. 8. That is, the application A may directly access the data of the application B through the proxy service.

If the application A determines that the access mode is the non-silent access mode, the application A may perform S1101, and then perform S1101 to S1107 shown in FIG. 11, that is, may be connected to the application B, and then access the data of the application B through the application B.

In some implementations, the application B may generate a message 3 or a message 7 based on feature information of to-be-accessed data and control parameters such as an operation type identifier and an access mode.

In some implementations, because the application A may access the data of the application B in the non-silent access mode, or may access the data of the application B in the silent access mode, to be compatible with the two access modes, the message 3 used to request to access the data of the application B in S603 and S801 may have a same data format as the message 7 used to request to access the data of the application B in S1105, and a silence identifier and a non-silence identifier are carried, so that both the proxy service and the application B can parse the message 3 and the message 7. However, because the message 3 carries the silence identifier, the message 7 carries the non-silence identifier, the proxy service responds to the message 3 but does not respond to the message 7, and the application B responds to the message 7 but does not respond to the message 3.

For example, the message 3 may include "datashare://com.B.app.datashare/table1/1" and "Proxy=true", and the message 7 may include "datashare://com.B.app.datashare/table1/1" and "Proxy=false". In this case, because data formats of the data 3 and the data 7 are the same, both the proxy service and the application B may parse the message 3 and the message 7, to obtain "datashare://com.B.app.datashare/table1/1" and "Proxy=true" included in the message 3, and obtain "datashare://com.B.app.datashare/table1/1" and "Proxy=false" included in the message 7. Because "Proxy=true" included in the message 3 indicates that a current access mode is the silent access mode, the application B may not respond to the message 3, for example, may discard the message 3, and the proxy service may access the data of the application B in response to the message 3. Because "Proxy=false" included in the message 7 indicates that a current access mode is the non-silent access mode, the application B may access the data of the application B in response to the message 7, and the proxy service may not respond to the message 3, for example, may discard the message 3.

In some implementations, to further improve compatibility of the two access modes and further improve access reliability, a manner in which the proxy service performs connection authentication in S605 and S802 may be the same as a manner in which the activity manager performs connection authentication in S1102; and/or a manner in which the proxy service performs access authentication in S605 and S802 may be the same as a manner in which the application B performs access authentication in S1106.

In this embodiment of this application, when the application A accesses the data of the application B, the application B may choose to use the silent access mode or the non-silent access mode. When determining to use the silent access mode, the application B may further directly communicate with the proxy service when determining the identity information of the proxy service. In addition, data access in the non-silent access mode is also compatible. This further improves data access efficiency.

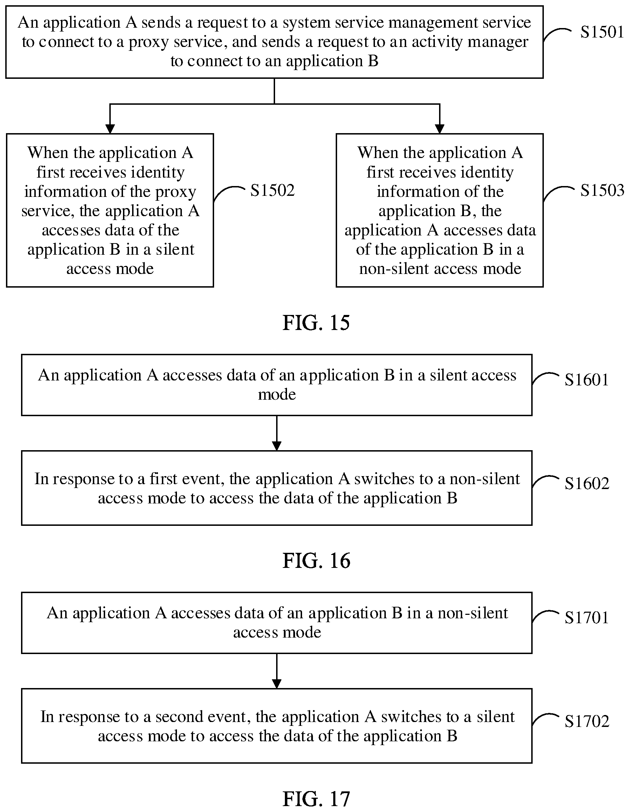

FIG. 15 is a flowchart of a data access method according to an embodiment of this application. The method may be applied to an application A. The application A may request to connect to both an application B and a proxy service, and access data of the application B through the application B or the proxy service that is first successfully connected. The application A may be a data consumer, the application B may be a data producer, and the proxy service is a system service and has high system permission, including that the proxy service has permission to directly access the data producer and permission to reside in an electronic device. It should be noted that the method is not limited to a specific sequence described in FIG. 15 and below. It should be understood that, in another embodiment, sequences of some steps in the method may be mutually exchanged according to an actual requirement, or some steps in the method may be omitted or deleted. The method includes the following steps.

S1501: The application A sends a request to a system service management service to connect to the proxy service, and sends a request to an activity manager to connect to the application B.

S1502: When the application A first receives identity information of the proxy service, the application A performs S603 or S801, to access the data of the application B in a silent access mode.

S1503: When the application A first receives identity information of the application B, the application A performs S1105, to access the data of the application B in a non-silent access mode.

In this embodiment of this application, the application A may be simultaneously connected to the proxy service or the application B, so that the application A accesses the data of the application B in the silent access mode when being first successfully connected to the proxy service, or the application A accesses the data of the application B in the non-silent access mode when being first successfully connected to the application B, so that efficiency of cross-application access is further improved.

FIG. 16 is a flowchart of a data access method according to an embodiment of this application. The method may be applied to an application A. The application A may first access data of an application B in a silent access mode, and then in response to a first event, switch to a non-silent mode to access the data of the application B. The application A may be a data consumer, the application B may be a data producer, and a proxy service is a system service and has high system permission, including that the proxy service has permission to directly access the data producer and permission to reside in an electronic device. It should be noted that the method is not limited to a specific sequence described in FIG. 16 and below. It should be understood that, in another embodiment, sequences of some steps in the method may be mutually exchanged according to an actual requirement, or some steps in the method may be omitted or deleted. The method includes the following steps.

S1601: The application A accesses the data of the application B in the silent access mode.

For a manner in which the application A accesses the data of the application B in the silent access mode, refer to related descriptions in S601 to S606 and S801 to S803.

S1602: In response to the first event, the application A switches to the non-silent access mode to access the data of the application B.

The first event may be: triggering the application A to switch a cross-application access mode from the silent access mode to the non-silent access mode. For a manner in which the application A accesses the data of the application B in the non-silent access mode, refer to related descriptions in S1101 to S1107.

It should be noted that, during actual application, the first event may be detected by the application A, or may be detected by another application or another service in the electronic device. A manner of detecting the first event is not limited in this embodiment of this application.

In some implementations, the first event may include at least one of the following events: The application A is successfully connected to the application B; the proxy service rejects an access request of the application A or the proxy service does not respond to the access request; a data access occasion changes from daytime to nighttime; the electronic device switches from a busy state to an idle state; a device resource status of the electronic device changes from an insufficient state to a sufficient state; and the electronic device switches from a power saving state to a normal state. It should be noted that the first event may be determined by the electronic device in advance, and during actual application, the first event may further include more or fewer events.

In this embodiment of this application, the application A first accesses the data of the application B in the silent access mode, and in response to the first event, switches to the non-silent access mode to access the data of the application B. This further improves reliability of cross-application access.

FIG. 17 is a flowchart of a data access method according to an embodiment of this application. The method may be applied to an application A. The application A may first access data of an application B in a non-silent access mode, and then in response to a second event, switch to a silent mode to access the data of the application B. The application A may be a data consumer, the application B may be a data producer, and a proxy service is a system service and has high system permission, including that the proxy service has permission to directly access the data producer and permission to reside in an electronic device. It should be noted that the method is not limited to a specific sequence described in FIG. 17 and below. It should be understood that, in another embodiment, sequences of some steps in the method may be mutually exchanged according to an actual requirement, or some steps in the method may be omitted or deleted. The method includes the following steps.

S1701: The application A accesses the data of the application B in the non-silent access mode.

For a manner in which the application A accesses the data of the application B in the non-silent access mode, refer to related descriptions in S1101 to S1107.

S1702: In response to the second event, the application A switches to the silent access mode to access the data of the application B.

The second event may be: triggering the application A to switch a cross-application access mode from the non-silent access mode to the silent access mode. For a manner in which the application A accesses the data of the application B in the silent access mode, refer to related descriptions in S601 to S606 and S801 to S803.

It should be noted that, during actual application, the second event may be detected by the application A, or may be detected by another application or another service in the electronic device. A manner of detecting the second event is not limited in this embodiment of this application.

In some implementations, the second event may include at least one of the following events: The application A fails to be connected to the application B, for example, the application A cannot continue to be connected to the application B when a process of the application B is stopped; the application B does not respond to an access request of the application A; a data access occasion changes from nighttime to daytime; the electronic device switches from an idle state to a busy state; a device resource status of the electronic device changes from a sufficient state to an insufficient state; and the electronic device switches from a normal state to a power saving state. It should be noted that the second event may be determined by the electronic device in advance, and during actual application, the second event may further include more or fewer events. It should be further noted that the second event may be different from the first event, and the first event and the second event cannot occur simultaneously. In some implementations, the second event and the first event may be mutually opposite events.

In this embodiment of this application, the application A first accesses the data of the application B in the non-silent access mode, and in response to the second event, switches to the silent access mode to access the data of the application B. This further improves reliability of cross-application access.

It can be learned with reference to FIG. 5, FIG. 16, and FIG. 17 that, when accessing the data of the application B, the application A may first select, based on a preset access mode selection strategy, the silent access mode to access the data of the application B, or the non-silent access mode to access the data of the application B. After starting to perform access in the mode determined based on the access mode selection strategy, the application A may further switch between the silent access mode and the non-silent access mode based on the first event and the second event. In this way, reliability of cross-application access can be further improved, and an access mode at any moment can match requirements of the electronic device at the moment in various aspects such as power consumption. This improves performance of the electronic device.

For example, the first event includes that the application A is successfully connected to the application B, and the second event includes that the application A fails to be connected to the application B.

At a moment t1, before the application A accesses the data of the application B, the application A may not determine whether the application B is in a running state. In this case, the application A may first access the data of the application in the silent access mode, and the application A is connected to the application B through an activity manager.

At a moment t2, the application A is successfully connected to the application B. In this case, when accessing the data of the application B next time, the application A switches to the non-silent access mode to access the data of the application B.

At a moment t3, the application B stops running.

At a moment t4, the application A detects that the application A cannot be connected to the application B. In this case, when accessing the data of the application B next time, the application A switches to the silent access mode to access the data of the application B.

At a moment t5, the application B is started by another application, and the application A is successfully connected to the application B again. In this case, when accessing the data of the application B next time, the application A switches to the non-silent access mode again to access the data of the application B.

The moment t1 is earlier than the moment t2, the moment t2 is earlier than the moment t3, the moment t3 is earlier than the moment t4, and the moment t4 is earlier than the moment t5.

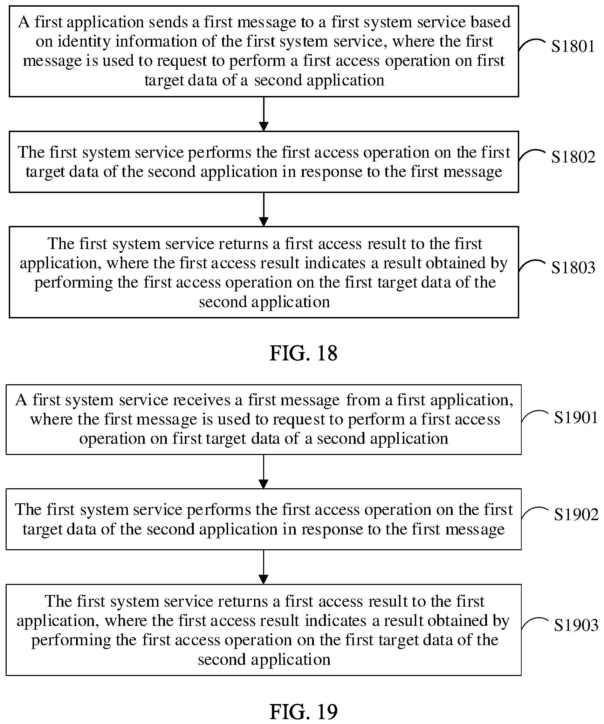

FIG. 18 is a flowchart of a data access method according to an embodiment of this application. The method may be applied to an electronic device, and the electronic device includes a first application, a second application, and a first system service. The first application may be the data consumer or the application A described above, to perform operations performed by the data consumer or the application A in the foregoing embodiments. The second application may be the data producer, the application B, or the application C described above, to perform operations performed by the data producer, the application B, or the application C in the foregoing embodiments. The first system service may be the proxy service described above, to perform operations performed by the proxy service in the foregoing embodiments. It should be noted that the method is not limited to a specific sequence described in FIG. 18 and below. It should be understood that, in another embodiment, sequences of some steps in the method may be mutually exchanged according to an actual requirement, or some steps in the method may be omitted or deleted. The method includes the following steps.

S1801: The first application sends a first message to the first system service based on identity information of the first system service, where the first message is used to request to perform a first access operation on first target data of the second application.

For a manner in which the first application performs S1801, refer to related descriptions in S603, S801, S903, or S1003.

In some implementations, the first message may be the message 3 or message 7 described above.

S1802: The first system service performs the first access operation on the first target data of the second application in response to the first message.

For a manner in which the first system service performs S1802, refer to related descriptions in S606, S803, S905, or S1005.

S1803: The first system service returns a first access result to the first application, where the first access result indicates a result obtained by performing the first access operation on the first target data of the second application.

For a manner in which the first system service performs S1803, also refer to related descriptions in S606, S803, S906, or S1006.

In some implementations, the first system service may send a message 4 to the first application, where the message 4 may include the first access result. In some implementations, after performing the first access operation on the first target data of the second application, the first system service may actively return the first access result to the first application. In some other implementations, after performing a result of the first access operation on the first target data of the second application, the first system service may not actively return the first access result to the first application, but the first application sends a message 9 to the first system service, where the message 9 may be used to query the first access result corresponding to the message 3. When receiving the message 9, the proxy service returns the first access result to the application A. In other words, when the first application queries the first access result from the first system service, the first system service returns the first access result to the first application.

In this embodiment of this application, because the first system service has permission to directly access the data producer and the permission to reside in the electronic device, when the first system service does not need to be additionally enabled again, and the second application does not need to be started, the first application may send the first message to the first system service based on the identity information of the first system service; the first system service may perform the first access operation on the first target data of the second application based on the first message in response to the first message; and the first system service may further return the first access result to the first application. This reduces power consumption of the electronic device and improves performance of the electronic device.

In some implementations, the electronic device further includes a second system service, the second system service is used to manage a plurality of system services in the electronic device, the plurality of system services include the first system service, and before the first application sends the first message to the first system service based on the identity information of the first system service, the method further includes: The first application obtains the identity information of the first system service from the second system service.

In some implementations, the second system service may be the system service management service described above. For a manner in which the first application obtains the identity information of the first system service, refer to related descriptions in S601 and S602, S901 and S902, or S1001 and S1002.

In some implementations, for determining whether to use the silent access mode or the non-silent access mode, refer to related descriptions in S502, S1401, or S1501 to S1503.

In some implementations, the electronic device further includes a third system service, the third system service manages at least one application in the electronic device, the at least one application includes the second application, and the method further includes: The first application obtains identity information of the second application from the third system service; the first application sends the first message and a non-silence identifier to the second application based on the identity information of the second application, where the non-silence identifier is used to indicate to access the first target data of the second application through the second application; and when the second application receives the first message and the non-silence identifier, the second application performs the first access operation on the first target data of the second application in response to the first message.

In some implementations, the third system service may include the activity manager described above.

In some implementations, the non-silence identifier may be carried in the first message, and the first message may be the message 7 described above.

In some implementations, for a manner in which the first application obtains the identity information of the second application from the third system service, refer to related descriptions in S1101 to S1104, S1201 to S1204, or S1301 to S1304. For a manner in which the first application sends the first message and the non-silence identifier to the second application based on the identity information of the second application, refer to related descriptions in S1105, S1205, or S1305. For a manner in which the second application performs the first access operation on the first target data of the second application in response to the first message, refer to related descriptions in S1107, S1207, or S1307. In some implementations, the third system service may perform connection authentication on the first application in the manner described in S1102, S1202, or S1302. In some implementations, the second application may perform access authentication on the first application in the manner described in S1106, S1206, or S1306. In some implementations, the second application may return the first access result to the first application. In some implementations, for a manner in which the second application may return the first access result to the first application, refer to related descriptions in S1107, S1208, or S1308.

In some implementations, after the first application sends the first message to the first system service based on the identity information of the first system service, the method further includes: The first application obtains the identity information of the second application from the third system service in response to a first event, where the first event is used to trigger the first application to switch from the silent access mode to the non-silent access mode; the first application sends a second message and the non-silence identifier to the second application based on the identity information of the second application, where the second message is used to request to perform a second access operation on second target data of the second application; and when the second application receives the second message and the non-silence identifier, the second application performs the second access operation on the second target data of the second application in response to the second message.

In some implementations, for a manner in which the first application switches from the silent access mode to the non-silent access mode, refer to related descriptions in S1601 and S1602.

In some implementations, the second application may return a second access result to the first application, and the second access result may indicate a result obtained by performing the second access operation on the second target data of the second application.

In some implementations, after the first application sends the first message and the non-silence identifier to the second application based on the identity information of the second application, the method further includes: The first application sends a third message to the first system service based on the identity information of the first system service in response to a second event, where the second event is used to trigger the first application to switch from the non-silent access mode to the silent access mode, and the third message is used to request to perform a third access operation on third target data of the second application; and the first system service performs the third access operation on the third target data of the second application in response to the third message.

In some implementations, for a manner in which the first application switches from the non-silent access mode to the silent access mode, refer to related descriptions in S1701 and S1702.

In some implementations, the first system service may return a third access result to the first application, and the third access result may indicate a result obtained by performing the third access operation on the third target data of the second application.

In some implementations, the first system service is further used to provide a data storage service for the second application, the first system service includes a data directory corresponding to the second application, and that the first system service performs the first access operation on the first target data of the second application in response to the first message includes: The first system service determines a storage location of the first target data based on the data directory; and the first system service performs the first access operation on the first target data at the storage location.

In some implementations, the first system service may be a subservice in the distributed data management service described above.

In some implementations, the first system service may determine the storage location of the first target data from the data directory based on the feature information of the first target data.

In some implementations, the electronic device further includes a fourth system service, the fourth system service is used to provide a data storage service for the second application, the fourth system service includes a data directory corresponding to the second application, and that the first system service performs the first access operation on the first target data of the second application in response to the first message includes: The first system service obtains the data directory from the fourth system service; the first system service determines a storage location of the first target data based on the data directory; and the first system service performs the first access operation on the first target data at the storage location.

In some implementations, the fourth system service may be the distributed data management service described above, and the distributed data management service and the proxy service may be two independent system services.

In some implementations, before the first system service performs the first access operation on the first target data of the second application in response to the first message, the method further includes: The first system service determines that the first application has permission to connect to the second application.

In some implementations, for a manner in which the first system service performs connection authentication on the first application, refer to related descriptions in S605, S802, S904, or S1004.

In some implementations, before the first system service performs the first access operation on the first target data of the second application in response to the first message, the method further includes: The first system service determines that the first application has permission to access the second application.

In some implementations, for a manner in which the first system service performs access authentication on the first application, refer to related descriptions in S605, S802, S904, or S1004.

FIG. 19 is a flowchart of a data access method according to an embodiment of this application. The method may be applied to a first system service in an electronic device, and the electronic device further includes a first application and a second application. The first application may be the data consumer or the application A described above, to perform operations performed by the data consumer or the application A in the foregoing embodiments. The second application may be the data producer, the application B, or the application C described above, to perform operations performed by the data producer, the application B, or the application C in the foregoing embodiments. The first system service may be the proxy service described above, to perform operations performed by the proxy service in the foregoing embodiments. It should be noted that the method is not limited to a specific sequence described in FIG. 19 and below. It should be understood that, in another embodiment, sequences of some steps in the method may be mutually exchanged according to an actual requirement, or some steps in the method may be omitted or deleted. The method includes the following steps.

S1901: The first system service receives a first message from the first application, where the first message is used to request to perform a first access operation on first target data of a second application.

S1902: The first system service performs the first access operation on the first target data of the second application in response to the first message.

S1903: The first system service returns a first access result to the first application, where the first access result indicates a result obtained by performing the first access operation on the first target data of the second application.

In this embodiment of this application, because the first system service has permission to directly access the data producer and the permission to reside in the electronic device, when the first system service does not need to be additionally enabled again, and the second application does not need to be started, the first system service may obtain the first message sent by the first application, and perform the first access operation on the first target data of the second application based on the first message in response to the first message; and the first system service may further return the first access result to the first application. This reduces power consumption of the electronic device and improves performance of the electronic device.

Based on a same inventive concept, an embodiment of this application further provides an electronic device. The electronic device provided in this embodiment includes a memory and a processor. The memory is configured to store a computer program. The processor is configured to perform the methods in the foregoing method embodiments when invoking the computer program.

The electronic device provided in this embodiment may perform the foregoing method embodiments. An implementation principle and technical effects of the electronic device are similar. Details are not described herein again.

Based on a same inventive concept, an embodiment of this application further provides a chip system. The chip system includes a processor, the processor is coupled to a memory, and the processor executes a computer program stored in the memory, to implement the methods in the foregoing method embodiments.

The chip system may be a single chip or a chip module including a plurality of chips.

An embodiment of this application further provides a computer-readable storage medium. The computer-readable storage medium stores a computer program. When the computer program is executed by a processor, the methods in the foregoing method embodiments are implemented.

An embodiment of this application further provides a computer program product. When the computer program product runs on an electronic device, the electronic device is enabled to perform the methods in the foregoing method embodiments during execution.

When the foregoing integrated unit is implemented in a form of a software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments may be implemented. The computer program includes computer program code, and the computer program code may be in a source code form, an object code form, an executable file, an intermediate form, or the like. The computer-readable storage medium may include at least: any entity or apparatus that can carry computer program code to a photographing apparatus/an electronic device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disc.

In the foregoing embodiments, descriptions of embodiments have respective focuses. For a part that is not described in detail or recorded in an embodiment, refer to related descriptions in other embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it shall not be considered that the implementation goes beyond the scope of this application.

In embodiments provided in this application, it should be understood that the disclosed apparatus/device and method may be implemented in other manners. For example, the described apparatus/device embodiment is merely an example. For example, division into the modules or units is merely logical function division and may be other division during actual implementation. For example, a plurality ofunits or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

It should be understood that, when used in the specification and appended claims of this application, the term "include" indicates presence of the described features, entireties, steps, operations, elements, and/or components, but does not exclude presence or addition of one or more other features, entireties, steps, operations, elements, components, and/or sets thereof.

It should also be understood that the term "and/or" used in the specification and the appended claims of this application indicates any combination and all possible combinations of one or more associated listed items, and includes these combinations.

As used in the specification and the appended claims of this application, the term "if" may be interpreted as "when" or "once" or "in response to determining" or "in response to detecting" depending on the context. Similarly, the phrase "if it is determined" or "if [a described condition or event] is detected" may be interpreted, depending on the context, to mean "once determined" or "in response to determining" or "once [the described condition or event] is detected" or "in response to detecting [the described condition or event]".

In addition, in descriptions of the specification and the appended claims of this application, the terms "first", "second", "third", and the like are merely intended for a purpose of differentiated description, but shall not be understood as an indication or an implication of relative importance.

Reference to "an embodiment", "some embodiments", or the like described in the specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and variants thereof all mean "include but are not limited to", unless otherwise specifically emphasized in another manner.

Finally, it should be noted that the foregoing embodiments are merely intended for describing the technical solutions of this application other than limiting this application. Although this application is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A data access method, applied to an electronic device, wherein the electronic device comprises a first application, a second application, and a first system service, the first system service has permission to reside in the electronic device and permission to access the second application, and the method comprises:
sending, by the first application, a first message to the first system service based on identity information of the first system service, wherein the first message is used to request to perform a first access operation on first target data of the second application;
performing, by the first system service, the first access operation on the first target data of the second application in response to the first message; and
returning, by the first system service, a first access result to the first application, wherein the first access result indicates a result obtained by performing the first access operation on the first target data of the second application.

2. The method according to claim 1, wherein the electronic device further comprises a second system service, the second system service is used to manage a plurality of system services in the electronic device, the plurality of system services comprise the first system service, and before the sending, by the first application, a first message to the first system service based on identity information of the first system service, the method further comprises:
obtaining, by the first application, the identity information of the first system service from the second system service.

3. The method according to claim 1 or 2, wherein the sending, by the first application, a first message to the first system service based on identity information of the first system service comprises:
when the second application is not started currently, sending, by the first application, the first message to the first system service based on the identity information of the first system service; or
when the first target data is persistent data, sending, by the first application, the first message to the first system service based on the identity information of the first system service; or
when the second application is a system application, sending, by the first application, the first message to the first system service based on the identity information of the first system service.

4. The method according to any one of claims 1 to 3, wherein the first application further sends a silence identifier to the first system service, and the silence identifier is used to indicate to access the first target data of the second application through the first system service; and
the performing, by the first system service, the first access operation on the first target data of the second application in response to the first message comprises:
when the first system service receives the first message and the silence identifier, performing, by the first system service, the first access operation on the first target data of the second application in response to the first message.

5. The method according to claim 4, wherein the electronic device further comprises a third system service, the third system service manages at least one application in the electronic device, and the at least one application comprises the second application; and the method further comprises:
obtaining, by the first application, identity information of the second application from the third system service;
sending, by the first application, the first message and a non-silence identifier to the second application based on the identity information of the second application, wherein the non-silence identifier is used to indicate to access the first target data of the second application through the second application; and
when the second application receives the first message and the non-silence identifier, performing, by the second application, the first access operation on the first target data of the second application in response to the first message.

6. The method according to claim 5, wherein after the sending, by the first application, a first message to the first system service based on identity information of the first system service, the method further comprises:
obtaining, by the first application, the identity information of the second application from the third system service in response to a first event, wherein the first event is used to trigger the first application to switch from a silent access mode to a non-silent access mode;
sending, by the first application, a second message and the non-silence identifier to the second application based on the identity information of the second application, wherein the second message is used to request to perform a second access operation on second target data of the second application; and
when the second application receives the second message and the non-silence identifier, performing, by the second application, the second access operation on the second target data of the second application in response to the second message.

7. The method according to claim 5 or 6, wherein after the sending, by the first application, the first message and a non-silence identifier to the second application based on the identity information of the second application, the method further comprises:
sending, by the first application, a third message to the first system service based on the identity information of the first system service in response to a second event, wherein the second event is used to trigger the first application to switch from the non-silent access mode to the silent access mode, and the third message is used to request to perform a third access operation on third target data of the second application; and
performing, by the first system service, the third access operation on the third target data of the second application in response to the third message.

8. The method according to any one of claims 1 to 7, wherein the first system service is further used to provide a data storage service for the second application, the first system service comprises a data directory corresponding to the second application, and the performing, by the first system service, the first access operation on the first target data of the second application in response to the first message comprises:
determining, by the first system service, a storage location of the first target data based on the data directory; and
performing, by the first system service, the first access operation on the first target data at the storage location.

9. The method according to any one of claims 1 to 7, wherein the electronic device further comprises a fourth system service, the fourth system service is used to provide a data storage service for the second application, the fourth system service comprises a data directory corresponding to the second application, and the performing, by the first system service, the first access operation on the first target data of the second application in response to the first message comprises:
obtaining, by the first system service, the data directory from the fourth system service;
determining, by the first system service, a storage location of the first target data based on the data directory; and
performing, by the first system service, the first access operation on the first target data at the storage location.

10. The method according to any one of claims 1 to 9, wherein the first application comprises a software development kit SDK of the second application; and the sending, by the first application, a first message to the first system service based on identity information of the first system service comprises:
sending, by the first application, the first message to the first system service based on the identity information of the first system service by using the SDK of the second application; and
the returning, by the first system service, a first access result to the first application comprises:
returning, by the first system service, the first access result to the SDK of the second application.

11. The method according to any one of claims 1 to 10, wherein before the performing, by the first system service, the first access operation on the first target data of the second application in response to the first message, the method further comprises:
determining, by the first system service, that the first application has permission to connect to the second application.

12. The method according to any one of claims 1 to 11, wherein before the performing, by the first system service, the first access operation on the first target data of the second application in response to the first message, the method further comprises:
determining, by the first system service, that the first application has the permission to access the second application.

13. A data access method, applied to a first system service in an electronic device, wherein the electronic device further comprises a first application and a second application, the first system service has permission to reside in the electronic device and permission to access the second application, and the method comprises:
receiving a first message from the first application, wherein the first message is used to request to perform a first access operation on first target data of the second application;
performing the first access operation on the first target data of the second application in response to the first message; and
returning a first access result to the first application, wherein the first access result indicates a result obtained by performing the first access operation on the first target data of the second application.

14. The method according to claim 13, wherein the performing the first access operation on the first target data of the second application in response to the first message comprises:
when receiving the first message and a silence identifier, performing the first access operation on the first target data of the second application in response to the first message, wherein the silence identifier is used to indicate to access the first target data of the second application through the first system service.

15. The method according to claim 13 or 14, wherein the first application comprises a software development kit SDK of the second application, and the receiving, by the first system service, a first message from the first application comprises:
receiving the first message sent by the SDK of the second application; and
the returning a first access result to the first application comprises:
returning the first access result to the SDK of the second application.

16. An electronic device, comprising a memory and a processor, wherein the memory is configured to store a computer program, and the processor is configured to perform the method according to any one of claims 1 to 12 or the method according to any one of claims 13 to 15 when invoking the computer program.

17. A computer-readable storage medium, wherein the computer-readable storage medium stores a computer program, and when the computer program is executed by a processor, the method according to any one of claims 1 to 12 or the method according to any one of claims 13 to 15 is implemented.

18. A computer program product, wherein when the computer program product runs on an electronic device, the electronic device is enabled to perform the method according to any one of claims 1 to 12 or the method according to any one of claims 13 to 15.
